(19)

**Europäisches Patentamt**
**European Patent Office**
**Office européen des brevets**

(11) **EP 4 622 357 A2**

(12) **EUROPEAN PATENT APPLICATION**

(43) Date of publication:
24.09.2025 Bulletin 2025/39

(21) Application number: 25195225.5

(22) Date of filing: **17.02.2023**

(51) International Patent Classification (IPC):
**H04W 52/14** (2009.01)

(52) Cooperative Patent Classification (CPC):
**H04W 72/0446; H04L 1/0073; H04L 1/08;**
**H04W 52/146; H04W 52/245;** H04L 5/0046;
H04L 5/0053; H04L 5/0094; H04W 72/1268;
H04W 72/23

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(30) Priority: 25.02.2022 US 202263314136 P
09.02.2023 US 202318166980

(62) Document number(s) of the earlier application(s) in
accordance with Art. 76 EPC:
**23760334.5 / 4 466 924**

(71) Applicant: **Samsung Electronics Co., Ltd.**
**Suwon-si, Gyeonggi-do 16677 (KR)**

(72) Inventors:
• **RUDOLF, Marian**
**16677 Suwon-si (KR)**
• **PAPASAKELLARIOU, Aristides**
**16677 Suwon-si (KR)**

(74) Representative: **Nederlandsch Octrooibureau**
**P.O. Box 29720**
**2502 LS The Hague (NL)**

Remarks:
This application was filed on 11.08.2025 as a
divisional application to the application mentioned
under INID code 62.

(54) **UPLINK TRANSMISSION IN FULL-DUPLEX SYSTEMS CROSS-REFERENCE TO RELATED
APPLICATION AND CLAIM OF PRIORITY**

(57)  The disclosure relates to a method performed by a terminal in a communication system, the method comprising: receiving, from a base station, subband full duplex, SBFD, configuration indicating whether a physical uplink shared channel, PUSCH, repetition is allowed within SBFD resources only, or within non-SBFD resources only, or across the SBFD resources and the non-SBFD resources; receiving, from the base station, configuration on the PUSCH repetition, the configuration on the PUSCH repetition including a number of repetitions; identifying available resources for the PUSCH repetition based on the SBFD configuration and the configuration on the PUSCH repetition; and transmitting, to the base station, PUSCHs repeatedly based on the available resources. The disclosure also relates to the corresponding terminal, a corresponding method performed by a base station, and the corresponding base station.

**EP 4 622 357 A2**

**Description**

**[Technical Field]**

The present disclosure relates generally to wireless communication systems and, more specifically, to uplink transmission in full-duplex systems.

**[Background Art]**

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

**[Disclosure of Invention]**

**[Technical Problem]**

A method and apparatus for efficient uplink transmission in full-duplex systems are required.

**[Solution to Problem]**

This disclosure relates to apparatuses and methods for facilitating uplink transmission in full-duplex systems.

In one embodiment, a method for transmitting repetitions of a physical uplink shared channel (PUSCH) on a cell is provided. The method includes receiving first information for first parameters that include a first time-domain resource allocation (TDRA) table associated with a first subset of slots from a set of slots on the cell and second information for second parameters that include a second TDRA table associated with a second subset of slots from the set of slots on the cell. The method further includes determining a first TDRA entry from the first TDRA table and a second TDRA entry from the second TDRA table. The method further includes transmitting a first repetition of the PUSCH in a first slot from the first subset of slots on the cell based on the first TDRA entry and a second repetition of the PUSCH in a second slot from the second subset of slots on the cell based on the second TDRA entry.

In another embodiment, a user equipment (UE) is provided. The UE includes a transceiver configured to receive first information for first parameters that include a first TDRA table associated with a first subset of slots from a set of slots on a cell and receive second information for second parameters that include a second TDRA table associated with a second subset of slots from the set of slots on the cell. The UE further includes a processor operably coupled to the transceiver. The processor is configured to determine a first TDRA entry from the first TDRA table and determine a second TDRA entry from the second TDRA table. The transceiver is further configured to transmit a first repetition of a PUSCH in a first slot from the first subset of slots on the cell based on the first TDRA entry and transmit a second repetition of the PUSCH in a second slot from the second subset of slots on the cell based on the second TDRA entry.

In yet another embodiment, a base station (BS) is provided. The BS includes a transceiver configured to transmit first information for first parameters that include a first TDRA table associated with a first subset of slots from a set of slots on a cell and transmit second information for second parameters that include a second TDRA table associated with a second subset of slots from the set of slots on the cell. The BS further includes a processor operably coupled to the transceiver. The processor is configured to determine a first TDRA entry from the first TDRA table and determine a second TDRA entry from the second TDRA table. The transceiver is further configured to receive a first repetition of a PUSCH in a first slot from the first subset of slots on the cell based on the first TDRA entry and receive a second repetition of the PUSCH in a second slot from the second subset of slots on the cell based on the second TDRA entry.

Other technical features may be readily apparent to one skilled in the art from the following figures, descriptions, and claims.

Before undertaking the DETAILED DESCRIPTION below, it may be advantageous to set forth definitions of certain words and phrases used throughout this patent document. The term "couple" and its derivatives refer to any direct or indirect communication between two or more elements, whether or not those elements are in physical contact with one another. The terms "transmit," "receive," and "communicate," as well as derivatives thereof, encompass both direct and indirect communication. The terms "include" and "comprise," as well as derivatives thereof, mean inclusion without limitation. The term "or" is inclusive, meaning and/or. The phrase "associated with," as well as derivatives thereof, means to include, be included within, interconnect with, contain, be contained within, connect to or with, couple to or with, be communicable with, cooperate with, interleave, juxtapose, be proximate to, be bound to or with, have, have a property of, have a relationship to or with, or the like. The term "controller" means any device, system or part thereof that controls at least one operation. Such a controller may be implemented in hardware or a combination of hardware and software and/or firmware. The functionality associated with any particular controller may be centralized or distributed, whether locally or remotely. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

Moreover, various functions described below can be implemented or supported by one or more computer programs, each of which is formed from computer readable program code and embodied in a computer readable medium. The terms "application" and "program" refer to one or more computer programs, software components, sets of instructions, procedures, functions, objects, classes, instances, related data, or a portion thereof adapted for implementation in a suitable computer readable program code. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable memory device.

Definitions for other certain words and phrases are provided throughout this patent document. Those of ordinary skill in the art should understand that in many if not most instances, such definitions apply to prior as well as future uses of such defined words and phrases.

**[Advantageous Effects of Invention]**

In the present disclosure, a method and apparatus for efficient uplink transmission in full-duplex systems are provided.

**[Brief Description of Drawings]**

For a more complete understanding of the present disclosure and its advantages, reference is now made to the following description taken in conjunction with the accompanying drawings, in which like reference numerals represent like parts:

FIGURE 1 illustrates an example wireless network according to embodiments of the present disclosure;
FIGURE 2 illustrates an example gNB according to embodiments of the present disclosure;
FIGURE 3 illustrates an example UE according to embodiments of the present disclosure;
FIGURES 4 illustrates example wireless transmit paths according to embodiments of the present disclosure;
FIGURES 5 illustrates example wireless receive paths according to embodiments of the present disclosure;
FIGURE 6 illustrates an example UL-DL frame configuration in a TDD communications system according to embodiments of the disclosure;
FIGURE 7 illustrates example UL-DL frame configurations in a full-duplex communications system according to embodiments of the disclosure;
FIGURE 8 illustrates an example PUSCH repetition with a configured set of allowed or set of disallowed slots according to embodiments of the disclosure;
FIGURE 9 illustrates an example UE determination of available slots for PUSCH repetition using the TDRA table according to embodiments of the disclosure;
FIGURE 10 illustrates another example UE determination of available slots for PUSCH repetition using the TDRA table according to embodiments of the disclosure;
FIGURE 11 illustrates an example UE determination of available slots for PUSCH repetition using common RRC according to embodiments of the disclosure;
FIGURE 12 illustrates an example UE determination of available slots for PUSCH repetition using UE-specific RRC according to embodiments of the disclosure; and
FIGURE 13 illustrates an example UE determination of available slots for PUSCH repetition using DCI according to embodiments of the disclosure.

**[Mode for Invention]**

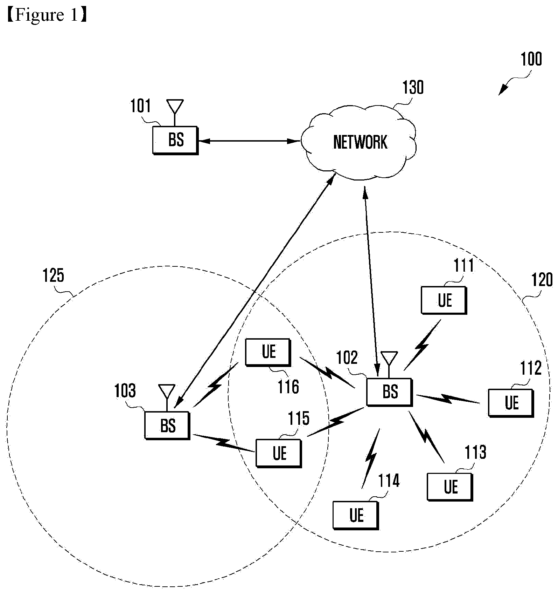

FIGURES 1 through 13, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably-arranged system or device.

The following documents and standards descriptions are hereby incorporated by reference into the present disclosure as if fully set forth herein: 3GPP TS 38.211 v17.0.0, "NR, Physical channels and modulation" (herein "REF 1"); 3GPP TS 38.212 v17.0.0, "NR, Multiplexing and Channel coding" (herein "REF 2"); 3GPP TS 38.213 v17.0.0, "NR, Physical Layer Procedures for Control" (herein "REF 3"); 3GPP TS 38.214 v17.0.0, "NR, Physical Layer Procedures for Data" (herein "REF 4); 3GPP TS 38.321 v16.5.0, "NR, Medium Access Control (MAC) protocol specification" (herein "REF 5"); 3GPP TS 38.331 v16.5.0, "NR, Radio Resource Control (RRC) Protocol Specification (herein "REF 6"), and 3GPP TS 38.133 v16.8.0, "NR; Requirements for support of radio resource management" (herein "REF 7").

Wireless communication has been one of the most successful innovations in modern history. Recently, the number of subscribers to wireless communication services exceeded five billion and continues to grow quickly. The demand of wireless data traffic is rapidly increasing due to the growing popularity among consumers and businesses of smart phones and other mobile data devices, such as tablets, "note pad" computers, net books, eBook readers, and machine type of devices. In order to meet the high growth in mobile data traffic and support new applications and deployments, improvements in radio interface efficiency and coverage is of paramount importance.

To meet the demand for wireless data traffic having increased since deployment of 4G communication systems and to enable various vertical applications, 5G/NR communication systems have been developed and are currently being deployed. The 5G/NR communication system is considered to be implemented in higher frequency (mmWave) bands, e.g., 28 GHz or 60GHz bands, so as to accomplish higher data rates or in lower frequency bands, such as 6 GHz, to enable robust coverage and mobility support. To decrease propagation loss of the radio waves and increase the transmission distance, the beamforming, massive multiple-input multiple-output (MIMO), full dimensional MIMO (FD-MIMO), array antenna, an analog beam forming, large scale antenna techniques are discussed in 5G/NR communication systems.

In addition, in 5G/NR communication systems, development for system network improvement is under way based on advanced small cells, cloud radio access networks (RANs), ultra-dense networks, device-to-device (D2D) communication, wireless backhaul, moving network, cooperative communication, coordinated multi-points (CoMP), reception-end interference cancelation and the like.

5th generation (5G) or new radio (NR) mobile communications is recently gathering increased momentum with all the worldwide technical activities on the various candidate technologies from industry and academia. The candidate enablers for the 5G/NR mobile communications include massive antenna technologies, from legacy cellular frequency bands up to high frequencies, to provide beamforming gain and support increased capacity, new waveform (e.g., a new radio access technology (RAT)) to flexibly accommodate various services/applications with different requirements, new multiple access schemes to support massive connections, and so on.

The discussion of 5G systems and frequency bands associated therewith is for reference as certain embodiments of the present disclosure may be implemented in 5G systems. However, the present disclosure is not limited to 5G systems or the frequency bands associated therewith, and embodiments of the present disclosure may be utilized in connection with any frequency band. For example, aspects of the present disclosure may also be applied to deployment of 5G communication systems, 6G or even later releases which may use terahertz (THz) bands.

FIGURES 1-3 below describe various embodiments implemented in wireless communications systems and with the use of orthogonal frequency division multiplexing (OFDM) or orthogonal frequency division multiple access (OFDMA) communication techniques. The descriptions of FIGURES 1-3 are not meant to imply physical or architectural limitations to the manner in which different embodiments may be implemented. Different embodiments of the present disclosure may be implemented in any suitably arranged communications system.

FIGURE 1 illustrates an example wireless network according to embodiments of the present disclosure. The embodiment of the wireless network shown in FIGURE 1 is for illustration only. Other embodiments of the wireless network 100 could be used without departing from the scope of this disclosure.

As shown in FIGURE 1, the wireless network includes a gNB 101 (e.g., base station, BS), a gNB 102, and a gNB 103. The gNB 101 communicates with the gNB 102 and the gNB 103. The gNB 101 also communicates with at least one network 130, such as the Internet, a proprietary Internet Protocol (IP) network, or other data network.

The gNB 102 provides wireless broadband access to the network 130 for a first plurality of user equipments (UEs) within a coverage area 120 of the gNB 102. The first plurality of UEs includes a UE 111, which may be located in a small business; a UE 112, which may be located in an enterprise; a UE 113, which may be a WiFi hotspot; a UE 114, which may be located in a first residence; a UE 115, which may be located in a second residence; and a UE 116, which may be a mobile device, such as a cell phone, a wireless laptop, a wireless PDA, or the like. The gNB 103 provides wireless broadband access to the network 130 for a second plurality of UEs within a coverage area 125 of the gNB 103. The second plurality of UEs includes the UE 115 and the UE 116. In some embodiments, one or more of the gNBs 101-103 may communicate with each other and with the UEs 111-116 using 5G/NR, long term evolution (LTE), long term evolution-advanced (LTE-A), WiMAX, WiFi, or other wireless communication techniques.

Depending on the network type, the term "base station" or "BS" can refer to any component (or collection of components) configured to provide wireless access to a network, such as transmit point (TP), transmit-receive point (TRP), an enhanced base station (eNodeB or eNB) , gNB, a macrocell, a femtocell, a WiFi access point (AP) , or other wirelessly enabled devices. Base stations may provide wireless access in accordance with one or more wireless communication protocols, e.g., 5G 3GPP New Radio Interface/Access (NR), long term evolution (LTE) , LTE advanced (LTE-A) , High Speed Packet Access (HSPA), Wi-Fi 802.11a/b/g/n/ac, etc. For the sake of convenience, the terms "BS" and "TRP" are used interchangeably in this patent document to refer to network infrastructure components that provide wireless access to remote terminals. Also, depending on the network type, the term "user equipment" or "UE" can refer to any component such as "mobile station," "subscriber station," "remote terminal," "wireless terminal," "receive point," or "user device." For the sake of convenience, the terms "user equipment" and "UE" are used in this patent document to refer to remote wireless equipment that wirelessly accesses a BS, whether the UE is a mobile device (such as a mobile telephone or smartphone) or is normally considered a stationary device (such as a desktop computer or vending machine).

Dotted lines show the approximate extents of the coverage areas 120 and 125, which are shown as approximately circular for the purposes of illustration and explanation only. It should be clearly understood that the coverage areas associated with gNBs, such as the coverage areas 120 and 125, may have other shapes, including irregular shapes, depending upon the configuration of the gNBs and variations in the radio environment associated with natural and man-made obstructions.

As described in more detail below, one or more of the UEs 111-116 include circuitry, programing, or a combination thereof for facilitating uplink transmission in full-duplex systems. In certain embodiments, one or more of the BSs 101-103 include circuitry, programing, or a combination thereof for facilitating uplink transmission in full-duplex systems.

Although FIGURE 1 illustrates one example of a wireless network, various changes may be made to FIGURE 1. For example, the wireless network could include any number of gNBs and any number of UEs in any suitable arrangement. Also, the gNB 101 could communicate directly with any number of UEs and provide those UEs with wireless broadband access to the network 130. Similarly, each gNB 102-103 could communicate directly with the network 130 and provide UEs with direct wireless broadband access to the network 130. Further, the gNBs 101, 102, and/or 103 could provide access to other or additional external networks, such as external telephone networks or other types of data networks.

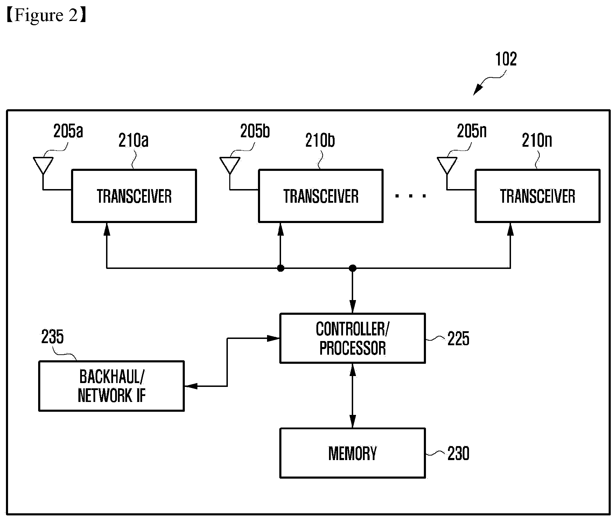

FIGURE 2 illustrates an example gNB 102 according to embodiments of the present disclosure. The embodiment of the gNB 102 illustrated in FIGURE 2 is for illustration only, and the gNBs 101 and 103 of FIGURE 1 could have the same or similar configuration. However, gNBs come in a wide variety of configurations, and FIGURE 2 does not limit the scope of this disclosure to any particular implementation of a gNB.

As shown in FIGURE 2, the gNB 102 includes multiple antennas 205a-205n, multiple transceivers 210a-210n, a controller/processor 225, a memory 230, and a backhaul or network interface 235.

The transceivers 210a-210n receive, from the antennas 205a-205n, incoming RF signals, such as signals transmitted by UEs in the network 100. The transceivers 210a-210n down-convert the incoming RF signals to generate IF or baseband signals. The IF or baseband signals are processed by receive (RX) processing circuitry in the transceivers 210a-210n and/or controller/processor 225, which generates processed baseband signals by filtering, decoding, and/or digitizing the baseband or IF signals. The controller/processor 225 may further process the baseband signals.

Transmit (TX) processing circuitry in the transceivers 210a-210n and/or controller/processor 225 receives analog or digital data (such as voice data, web data, e-mail, or interactive video game data) from the controller/processor 225. The TX processing circuitry encodes, multiplexes, and/or digitizes the outgoing baseband data to generate processed baseband or IF signals. The transceivers 210a-210n up-converts the baseband or IF signals to RF signals that are transmitted via the antennas 205a-205n.

The controller/processor 225 can include one or more processors or other processing devices that control the overall operation of the gNB 102. For example, the controller/processor 225 could control the reception of UL channel signals and the transmission of DL channel signals by the transceivers 210a-210n in accordance with well-known principles. The controller/processor 225 could support additional functions as well, such as more advanced wireless communication functions. For instance, the controller/processor 225 could support beam forming or directional routing operations in which outgoing/incoming signals from/to multiple antennas 205a-205n are weighted differently to effectively steer the outgoing signals in a desired direction. As another example, the controller/processor 225 could support methods for facilitating uplink transmission in full-duplex systems. Any of a wide variety of other functions could be supported in the gNB 102 by the controller/processor 225.

The controller/processor 225 is also capable of executing programs and other processes resident in the memory 230, such as an OS. The controller/processor 225 can move data into or out of the memory 230 as required by an executing process.

The controller/processor 225 is also coupled to the backhaul or network interface 235. The backhaul or network interface 235 allows the gNB 102 to communicate with other devices or systems over a backhaul connection or over a network. The interface 235 could support communications over any suitable wired or wireless connection(s). For example, when the gNB 102 is implemented as part of a cellular communication system (such as one supporting 5G/NR, LTE, or LTE-A), the interface 235 could allow the gNB 102 to communicate with other gNBs over a wired or wireless backhaul connection. When the gNB 102 is implemented as an access point, the interface 235 could allow the gNB 102 to communicate over a wired or wireless local area network or over a wired or wireless connection to a larger network (such as the Internet). The interface 235 includes any suitable structure supporting communications over a wired or wireless connection, such as an Ethernet or transceiver.

The memory 230 is coupled to the controller/processor 225. Part of the memory 230 could include a RAM, and another part of the memory 230 could include a Flash memory or other ROM.

Although FIGURE 2 illustrates one example of gNB 102, various changes may be made to FIGURE 2. For example, the gNB 102 could include any number of each component shown in FIGURE 2. Also, various components in FIGURE 2 could be combined, further subdivided, or omitted and additional components could be added according to particular needs.

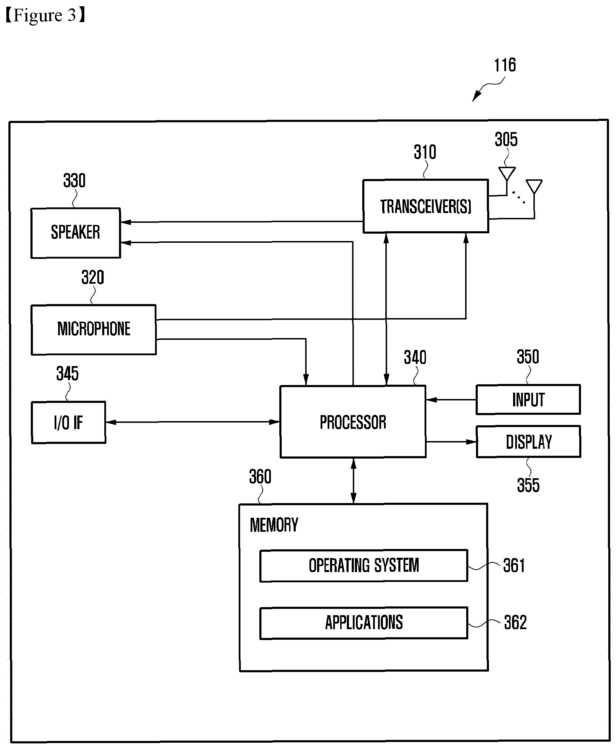

FIGURE 3 illustrates an example UE 116 according to embodiments of the present disclosure. The embodiment of the UE 116 illustrated in FIGURE 3 is for illustration only, and the UEs 111-115 of FIGURE 1 could have the same or similar configuration. However, UEs come in a wide variety of configurations, and FIGURE 3 does not limit the scope of this disclosure to any particular implementation of a UE.

As shown in FIGURE 3, the UE 116 includes antenna(s) 305, a transceiver(s) 310, and a microphone 320. The UE 116 also includes a speaker 330, a processor 340, an input/output (I/O) interface (IF) 345, an input 350, a display 355, and a memory 360. The memory 360 includes an operating system (OS) 361 and one or more applications 362.

The transceiver(s) 310 receives, from the antenna 305, an incoming RF signal transmitted by a gNB of the network 100. The transceiver(s) 310 down-converts the incoming RF signal to generate an intermediate frequency (IF) or baseband signal. The IF or baseband signal is processed by RX processing circuitry in the transceiver(s) 310 and/or processor 340, which generates a processed baseband signal by filtering, decoding, and/or digitizing the baseband or IF signal. The RX processing circuitry sends the processed baseband signal to the speaker 330 (such as for voice data) or is processed by the processor 340 (such as for web browsing data).

TX processing circuitry in the transceiver(s) 310 and/or processor 340 receives analog or digital voice data from the microphone 320 or other outgoing baseband data (such as web data, e-mail, or interactive video game data) from the processor 340. The TX processing circuitry encodes, multiplexes, and/or digitizes the outgoing baseband data to generate a processed baseband or IF signal. The transceiver(s) 310 up-converts the baseband or IF signal to an RF signal that is transmitted via the antenna(s) 305.

The processor 340 can include one or more processors or other processing devices and execute the OS 361 stored in the memory 360 in order to control the overall operation of the UE 116. For example, the processor 340 could control the reception of DL channel signals and the transmission of UL channel signals by the transceiver(s) 310 in accordance with well-known principles. In some embodiments, the processor 340 includes at least one microprocessor or microcontroller.

The processor 340 is also capable of executing other processes and programs resident in the memory 360. The processor 340 can move data into or out of the memory 360 as required by an executing process. In some embodiments, the processor 340 is configured to execute the applications 362 based on the OS 361 or in response to signals received from gNBs or an operator. The processor 340 is also coupled to the I/O interface 345, which provides the UE 116 with the ability to connect to other devices, such as laptop computers and handheld computers. The I/O interface 345 is the communication path between these accessories and the processor 340.

The processor 340 is also coupled to the input 350, which includes for example, a touchscreen, keypad, etc., and the display 355. The operator of the UE 116 can use the input 350 to enter data into the UE 116. The display 355 may be a liquid crystal display, light emitting diode display, or other display capable of rendering text and/or at least limited graphics, such as from web sites.

The memory 360 is coupled to the processor 340. Part of the memory 360 could include a random-access memory (RAM), and another part of the memory 360 could include a Flash memory or other read-only memory (ROM).

Although FIGURE 3 illustrates one example of UE 116, various changes may be made to FIGURE 3. For example, various components in FIGURE 3 could be combined, further subdivided, or omitted and additional components could be added according to particular needs. As a particular example, the processor 340 could be divided into multiple processors, such as one or more central processing units (CPUs) and one or more graphics processing units (GPUs). In another example, the transceiver(s) 310 may include any number of transceivers and signal processing chains and may be connected to any number of antennas. Also, while FIGURE 3 illustrates the UE 116 configured as a mobile telephone or smartphone, UEs could be configured to operate as other types of mobile or stationary devices.

A communication system includes a downlink (DL) that refers to transmissions from a base station or one or more transmission points to UEs and an uplink (UL) that refers to transmissions from UEs to a base station or to one or more reception points.

A time unit for DL signaling or for UL signaling on a cell is referred to as a slot and can include one or more symbols. A symbol can also serve as an additional time unit. A frequency (or bandwidth (BW)) unit is referred to as a resource block (RB). One RB includes a number of sub-carriers (SCs). For example, a slot can have duration of 1 millisecond or 0.5 millisecond, include 14 symbols and an RB can include 12 SCs with inter-SC spacing of 15 kHz or 30 kHz, and so on.

DL signals include data signals conveying information content, control signals conveying DL control information (DCI), and reference signals (RS) that are also known as pilot signals. A gNB transmits data information or DCI through respective physical DL shared channels (PDSCHs) or physical DL control channels (PDCCHs). A PDSCH or a PDCCH can be transmitted over a variable number of slot symbols including one slot symbol. For brevity, a DCI format scheduling a PDSCH reception by a UE is referred to as a DL DCI format and a DCI format scheduling a PUSCH transmission from a UE is referred to as an UL DCI format.

A gNB transmits one or more of multiple types of RS including channel state information RS (CSI-RS) and demodulation RS (DMRS). A CSI-RS is primarily intended for UEs to perform measurements and provide channel state information (CSI) to a gNB. For channel measurement, non-zero power CSI-RS (NZP CSI-RS) resources are used. For interference measurement reports (IMRs), CSI interference measurement (CSI-IM) resources associated with a zero power CSI-RS (ZP CSI-RS) configuration are used. A CSI process consists of NZP CSI-RS and CSI-IM resources.

A UE can determine CSI-RS transmission parameters through DL control signaling or higher layer signaling, such as radio resource control (RRC) signaling, from a gNB. Transmission instances of a CSI-RS can be indicated by DL control signaling or be configured by higher layer signaling. A DMRS is transmitted only in the BW of a respective PDCCH or PDSCH and a UE can use the DMRS to demodulate data or control information.

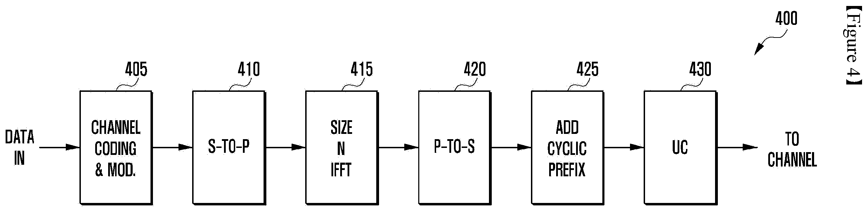

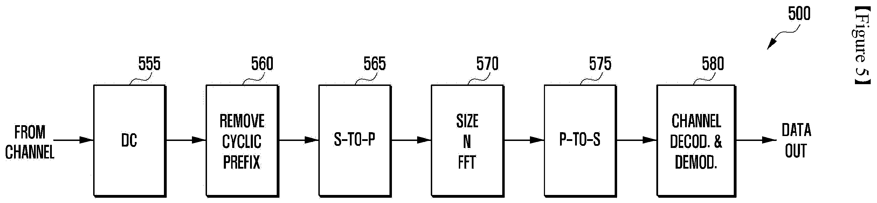

FIGURE 4 and FIGURE 5 illustrate example wireless transmit and receive paths according to this disclosure. In the following description, a transmit path 400, of FIGURE 4, may be described as being implemented in a BS (such as the BS 102), while a receive path 500, of FIGURE 5, may be described as being implemented in a UE (such as a UE 116). However, it may be understood that the receive path 500 can be implemented in a BS and that the transmit path 400 can be implemented in a UE. In some embodiments, the receive path 500 is configured to support uplink transmission in full-duplex systems as described in embodiments of the present disclosure.

The transmit path 400 as illustrated in FIGURE 4 includes a channel coding and modulation block 405, a serial-to-parallel (S-to-P) block 410, a size N inverse fast Fourier transform (IFFT) block 415, a parallel-to-serial (P-to-S) block 420, an add cyclic prefix block 425, and an up-converter (UC) 430. The receive path 500 as illustrated in FIGURE 5 includes a down-converter (DC) 555, a remove cyclic prefix block 560, a serial-to-parallel (S-to-P) block 565, a size N fast Fourier transform (FFT) block 570, a parallel-to-serial (P-to-S) block 575, and a channel decoding and demodulation block 580.

As illustrated in FIGURE 4, the channel coding and modulation block 405 receives a set of information bits, applies coding (such as a low-density parity check (LDPC) coding), and modulates the input bits (such as with quadrature phase shift keying (QPSK) or quadrature amplitude modulation (QAM)) to generate a sequence of frequency-domain modulation symbols. The serial-to-parallel block 410 converts (such as de-multiplexes) the serial modulated symbols to parallel data in order to generate N parallel symbol streams, where N is the IFFT/FFT size used in the BS 102 and the UE 116. The size N IFFT block 415 performs an IFFT operation on the N parallel symbol streams to generate time-domain output signals. The parallel-to-serial block 420 converts (such as multiplexes) the parallel time-domain output symbols from the size N IFFT block 415 in order to generate a serial time-domain signal. The add cyclic prefix block 425 inserts a cyclic prefix to the time-domain signal. The up-converter 430 modulates (such as up-converts) the output of the add cyclic prefix block 425 to an RF frequency for transmission via a wireless channel. The signal may also be filtered at baseband before conversion to the RF frequency.

A transmitted RF signal from the BS 102 arrives at the UE 116 after passing through the wireless channel, and reverse operations to those at the BS 102 are performed at the UE 116.

As illustrated in FIGURE 5, the down-converter 555 down-converts the received signal to a baseband frequency, and the remove cyclic prefix block 560 removes the cyclic prefix to generate a serial time-domain baseband signal. The serial-to-parallel block 565 converts the time-domain baseband signal to parallel time domain signals. The size N FFT block 570 performs an FFT algorithm to generate N parallel frequency-domain signals. The parallel-to-serial block 575 converts the parallel frequency-domain signals to a sequence of modulated data symbols. The channel decoding and demodulation block 580 demodulates and decodes the modulated symbols to recover the original input data stream.

Each of the BSs 101-103 may implement a transmit path 400 as illustrated in FIGURE 4 that is analogous to transmitting in the downlink to UEs 111-116 and may implement a receive path 500 as illustrated in FIGURE 5 that is analogous to receiving in the uplink from UEs 111-116. Similarly, each of UEs 111-116 may implement the transmit path 400 for transmitting in the uplink to the BSs 101-103 and may implement the receive path 500 for receiving in the downlink from the BSs 101-103.

Each of the components in FIGURE 4 and FIGURE 5 can be implemented using hardware or using a combination of hardware and software/firmware. As a particular example, at least some of the components in FIGURES 4 and FIGURE 5 may be implemented in software, while other components may be implemented by configurable hardware or a mixture of software and configurable hardware. For instance, the FFT block 570 and the IFFT block 515 may be implemented as configurable software algorithms, where the value of size N may be modified according to the implementation.

Furthermore, although described as using FFT and IFFT, this is by way of illustration only and may not be construed to limit the scope of this disclosure. Other types of transforms, such as discrete Fourier transform (DFT) and inverse discrete Fourier transform (IDFT) functions, can be used. It may be appreciated that the value of the variable N may be any integer number (such as 1, 2, 3, 4, or the like) for DFT and IDFT functions, while the value of the variable N may be any integer number that is a power of two (such as 1, 2, 4, 8, 16, or the like) for FFT and IFFT functions.

Although FIGURE 4 and FIGURE 5 illustrate examples of wireless transmit and receive paths, various changes may be made to FIGURE 4 and FIGURE 5. For example, various components in FIGURE 4 and FIGURE 5 can be combined, further subdivided, or omitted and additional components can be added according to particular needs. Also, FIGURE 4 and FIGURE 5 are meant to illustrate examples of the types of transmit and receive paths that can be used in a wireless network. Any other suitable architectures can be used to support wireless communications in a wireless network.

UL signals also include data signals conveying information content, control signals conveying UL control information (UCI), DMRS associated with data or UCI demodulation, sounding RS (SRS) enabling a gNB to perform UL channel measurement, and a random access (RA) preamble enabling a UE to perform random access (see also NR specification). A UE transmits data information or UCI through a respective physical UL shared channel (PUSCH) or a physical UL control channel (PUCCH). A PUSCH or a PUCCH can be transmitted over a variable number of slot symbols including one slot symbol. The gNB can configure the UE to transmit signals on a cell within an active UL BWP of the cell UL BW.

UCI includes hybrid automatic repeat request acknowledgement (HARQ-ACK) information, indicating correct or incorrect detection of data transport blocks (TBs) in a PDSCH, scheduling request (SR) indicating whether a UE has data in a buffer, and CSI reports enabling a gNB to select appropriate parameters for PDSCH or PDCCH transmissions to a UE. HARQ-ACK information can be configured to be with a smaller granularity than per TB and can be per data code block (CB) or per group of data CBs where a data TB includes a number of data CBs.

A CSI report from a UE can include a channel quality indicator (CQI) informing a gNB of a largest modulation and coding scheme (MCS) for the UE to detect a data TB with a predetermined block error rate (BLER), such as a 10% BLER (see NR specification), of a precoding matrix indicator (PMI) informing a gNB how to combine signals from multiple transmitter antennas in accordance with a multiple input multiple output (MIMO) transmission principle, and of a rank indicator (RI) indicating a transmission rank for a PDSCH.

UL RS includes DMRS and SRS. DMRS is transmitted only in a BW of a respective PUSCH or PUCCH transmission. A gNB can use a DMRS to demodulate information in a respective PUSCH or PUCCH. SRS is transmitted by a UE to provide a gNB with an UL CSI and, for a TDD system, an SRS transmission can also provide a PMI for DL transmission. Additionally, in order to establish synchronization or an initial higher layer connection with a gNB, a UE can transmit a physical random access channel (PRACH as shown in NR specifications).

An antenna port is defined such that the channel over which a symbol on the antenna port is conveyed can be inferred from the channel over which another symbol on the same antenna port is conveyed.

For DM-RS associated with a PDSCH, the channel over which a PDSCH symbol on one antenna port is conveyed can be inferred from the channel over which a DM-RS symbol on the same antenna port is conveyed only if the two symbols are within the same resource as the scheduled PDSCH, in the same slot, and in the same PRG.

For DM-RS associated with a PDCCH, the channel over which a PDCCH symbol on one antenna port is conveyed can be inferred from the channel over which a DM-RS symbol on the same antenna port is conveyed only if the two symbols are within resources for which the UE may assume the same precoding being used.

For DM-RS associated with a PBCH, the channel over which a PBCH symbol on one antenna port is conveyed can be inferred from the channel over which a DM-RS symbol on the same antenna port is conveyed only if the two symbols are within a SS/PBCH block transmitted within the same slot, and with the same block index.

Two antenna ports are said to be quasi co-located if the large-scale properties of the channel over which a symbol on one antenna port is conveyed can be inferred from the channel over which a symbol on the other antenna port is conveyed. The large-scale properties include one or more of delay spread, Doppler spread, Doppler shift, average gain, average delay, and spatial Rx parameters (e.g., spatial filter).

The UE may assume that SSBs transmitted with the same block index on the same center frequency location are quasi co-located with respect to Doppler spread, Doppler shift, average gain, average delay, delay spread, and, when applicable, spatial Rx parameters. The UE may not assume quasi co-location for any other SS/PBCH block transmissions.

In absence of CSI-RS configuration, and unless otherwise configured, the UE may assume PDSCH DM-RS and SSB to be quasi co-located with respect to Doppler shift, Doppler spread, average delay, delay spread, and, when applicable, spatial Rx parameters. The UE may assume that the PDSCH DM-RS within the same CDM group are quasi co-located with respect to Doppler shift, Doppler spread, average delay, delay spread, and spatial Rx. The UE may also assume that DMRS ports associated with a PDSCH are QCL with QCL type A, type D (when applicable) and average gain. The UE may further assume that no DM-RS collides with the SS/PBCH block.

The UE can be configured with a list of up to M TCI-State configurations within the higher layer parameter PDSCH-Config to decode PDSCH according to a detected PDCCH with DCI intended for the UE and the given serving cell, where M depends on the UE capability maxNumberConfiguredTCIstatesPerCC. Each TCI-State contains parameters for configuring a quasi-colocation (QCL) relationship between one or two downlink reference signals and the DMRS ports of the PDSCH, the DMRS port of PDCCH or the CSI-RS port(s) of a CSI-RS resource.

The quasi co-location relationship is configured by the higher layer parameter qcl-Type1 for the first DL RS, and qcl-Type2 for the second DL RS (if configured). For the case of two DL RSs, the QCL types may not be the same, regardless of whether the references are to the same DL RS or different DL RSs. The quasi co-location types corresponding to each DL RS are given by the higher layer parameter qcl-Type in QCL-Info and may take one of the following values: QCL-TypeA: {Doppler shift, Doppler spread, average delay, delay spread}; QCL-TypeB: {Doppler shift, Doppler spread; QCL-TypeC: {Doppler shift, average delay}; and QCL-TypeD: {Spatial Rx parameter}.

The UE receives a MAC-CE activation command to map up to [N] (e.g., N=8) TCI states to the codepoints of the DCI field "Transmission Configuration Indication." When the HARQ-ACK corresponding to the PDSCH carrying the activation command is transmitted in slot n, the indicated mapping between TCI states and codepoints of the DCI field "Transmission Configuration Indication" may be applied after a MAC-CE application time, e.g., starting from the first slot that is after slot e.g., $n+3N_{slot}^{subframe,\mu}$ .

The Rel-15 NR UL supports aggregation of multiple slots, e.g., up to 8, with TB repetition for PUSCH for both dynamic grants and configured grants. The number of PUSCH repetitions is configured by RRC parameter pusch-AggregationFactor. Two types of frequency hopping are supported, intra-slot frequency hopping and inter-slot frequency hopping.

Rel-16 NR introduces PUSCH repetition Types A and B. For both dynamic grant and configured grant, for a transport block, two or more repetitions can be in one slot, or across the slot boundary in consecutive available slots with each repetition in one slot. For both dynamic grant and configured grant Type 2, the number of repetitions can be also dynamically indicated in the L1 signaling. The number of repetitions for a scheduled UL transmission is RRC configured by parameter numberOfRepetitions for a row in the RRC time-domain resource allocation table. Different rows in the table may be configured with different values for the number of repetitions including the case where no repetition is configured. The DCI provided time-domain index field pointing into a row of the RRC table then signals the number of repetitions to be applied for the scheduled PUSCH transmission. The dynamically indicated Rel-16 number of repetitions overrides the RRC configured Rel-15 number of repetitions, if both are present.

To improve the NR UL coverage for both FR1 and FR2 as well as TDD and FDD, Rel-17 NR introduces the following enhancements for PUSCH. Note that other Rel-17 NR enhancements improve the UL coverage for PUCCH. For PUSCH repetition Type A, the maximum number of repetitions is increased up to 32, applicable to both PUSCH transmission with and without dynamic grant. In addition, counting based on available slots is supported, the increased maximum number of repetitions for counting based on available slots and counting based on physical slots are both 32. TB processing over multi-slot (TBoMS) is supported for PUSCH transmission with and without dynamic grant. For a single transmission of TB processing over multi-slot PUSCH, the TB size is based on all the allocated REs across the multiple slots, and the number of slots is counted based on the available slots for UL transmission. In addition, repetition of TB processing over multi-slot PUSCH is also supported. DMRS bundling is supported for PUSCH repetition Type A scheduled by DCI format 0_1 or 0_2, for PUSCH repetition Type A with configured grant, for PUSCH repetition Type B, and for TB processing over multi-slot PUSCH. PUSCH repetition Type A for MSG3 transmission is supported on both NUL and SUL, applicable to 4-step CBRA. If configured, the UE requests MSG3 repetition via separate PRACH resource when the RSRP of DL pathloss reference is lower than a configured threshold. In addition, repetition of CFRA PUSCH is also supported.

With reference to the Rel-17 NR procedures for PUSCH with aggregation or repetition when using dynamic grants, when the UE is scheduled to transmit a transport block and no CSI report, or the UE is scheduled to transmit a transport block and a CSI report(s) on PUSCH by a DCI, the 'Time domain resource assignment' field value m of the DCI provides a row index m + 1 to an allocated table. The determination of the time-domain resource allocation table to be used is given in REF4. The indexed row defines the slot offset K2, the start and length indicator SLIV, or directly the start symbol S and the allocation length L, the PUSCH mapping type, the number of slots used for TBS determination if numberOfSlotsTBoMS is present in the resource allocation table, and the number of repetitions if numberOfRepetitions is present in the resource allocation table to be applied in the PUSCH transmission. When the UE is scheduled to transmit a PUSCH with no transport block and with a CSI report(s) by a 'CSI request' field on a DCI, the time-domain allocation for the UL transmissions is further described in REF4.

For PUSCH scheduled by DCI format 0_1, if pusch-RepTypeIndicatorDCI-0-1 is set to 'pusch-RepTypeB', the UE applies PUSCH repetition Type B procedure when determining the time domain resource allocation. For PUSCH scheduled by DCI format 0_2, if pusch-RepTypeIndicatorDCI-0-2 is set to 'pusch-RepTypeB', the UE applies PUSCH repetition Type B procedure when determining the time domain resource allocation. Otherwise, the UE applies PUSCH repetition Type A procedure when determining the time domain resource allocation for PUSCH scheduled by PDCCH. For PUSCH scheduled by DCI format 0_1 or DCI format 0_2, if numberOfSlotsTBoMS is present and larger than 1, the UE applies TB processing over multiple slots procedure when determining the time domain resource allocation.

For PUSCH repetition Type A, the starting symbol S relative to the start of the slot, and the number of consecutive symbols L counting from the symbol S allocated for the PUSCH are determined from the start and length indicator SLIV of the indexed row. For PUSCH repetition Type B, the starting symbol S relative to the start of the slot, and the number of consecutive symbols L counting from the symbol S allocated for the PUSCH are provided by startSymbol and length of the indexed row of the resource allocation table, respectively.

For PUSCH repetition Type A, the PUSCH mapping type is set to Type A or Type B as defined in REF1 as given by the indexed row. For PUSCH repetition Type B, the PUSCH mapping type is set to Type B.

For PUSCH repetition Type A, when transmitting PUSCH scheduled by DCI format 0_1 or 0_2 in PDCCH with CRC scrambled with C-RNTI, MCS-C-RNTI, or CS-RNTI with NDI=1, the number of repetitions K is determined as equal to numberOfRepetitions if numberOfRepetitions is present in the resource allocation table; elseif the UE is configured with pusch-AggregationFactor, the number of repetitions K is equal to pusch-AggregationFactor; otherwise K=1. The number of slots used for TBS determination N is equal to 1.

For PUSCH repetition type A, when transmitting PUSCH scheduled by RAR UL grant, the 2 MSBs of the MCS information field (e.g., a MCS table) of the RAR UL grant provide a codepoint to determine the number of repetitions K according to REF4, based on whether or not the higher layer parameter numberOfMsg3Repetitions is configured. For PUSCH repetition type A, when transmitting PUSCH scheduled by DCI format 0_0 with CRC scrambled by TC-RNTI, the 2 MSBs of the MCS information field of the DCI format 0_0 with CRC scrambled by TC-RNTI provide a codepoint to determine the number of repetitions K according to REF4, based on whether or not the higher layer parameter numberOfMsg3Repetitions is configured.

If a UE is configured with pusch-TimeDomainAllocationListForMultiPUSCH, the UE does not expect to be configured with pusch-AggregationFactor. If a UE is configured with pusch-TimeDomainAllocationListForMultiPDSCH-r17 in which one or more rows contain multiple SLIVs for PUSCH on a UL BWP of a serving cell, the UE does not apply pusch-AggregationFactor, if configured, to DCI format 0_1 on the UL BWP of the serving cell and the UE does not expect to be configured with numberOfRepetitions in pusch-TimeDomainAllocationListForMultiPDSCH-r17.

For unpaired spectrum, when AvailableSlotCounting is enabled, the UE determines N·K slots for a PUSCH transmission of a PUSCH repetition type A scheduled by DCI format 0_1 or 0_2, based on tdd-UL-DL-Configuration-Common, tdd-UL-DL-ConfigurationDedicated and ssb-PositionsInBurst, and the TDRA information field value in the DCI format 0_1 or 0_2. A slot is not counted in the number of N·K slots for PUSCH transmission of a PUSCH repetition Type A scheduled by DCI format 0_1 or 0_2 if at least one of the symbols indicated by the indexed row of the used resource allocation table in the slot overlaps with a DL symbol indicated by tdd-UL-DL-ConfigurationCommon or tdd-UL-DL-ConfigurationDedicated if provided, or a symbol of an SS/PBCH block with index provided by ssb-PositionsInBurst. Otherwise, the UE determines N·K consecutive slots for a PUSCH transmission of a PUSCH repetition type A scheduled by DCI format 0_1 or 0_2, based on the TDRA information field value in the DCI format 0_1 or 0_2.

For paired spectrum and SUL band, the UE determines N·K consecutive slots for a PUSCH transmission of a PUSCH repetition type A scheduled by DCI format 0_1 or 0_2, based on the TDRA information field value in the DCI format 0_1 or 0_2, irrespective of whether AvailableSlotCounting is enabled or not.

For the case of reduced capability half-duplex UE, and when AvailableSlotCounting is enabled, a slot is not counted in the number of N·K slots for a PUSCH transmission of a PUSCH repetition Type A scheduled by DCI format 0_1 or 0_2, if at least one of the symbols indicated by the indexed row of the used resource allocation table in the slot overlaps with a symbol of an SS/PBCH block with index provided by ssb-PositionsInBurst.

If AvailableSlotCounting is enabled and a UE would transmit a PUSCH of PUSCH repetition Type A over N·K slots, and the UE does not transmit the PUSCH of PUSCH repetition Type A in a slot from the N·K slots, the UE counts the slots in the number of N·K slots as described in REF3.

For PUSCH repetition Type A, in case K>1, if the PUSCH is scheduled by DCI format 0_1 or 0_2 and if AvailableSlotCounting is enabled, the same symbol allocation is applied across the N·K slots determined for the PUSCH transmission and the PUSCH is limited to a single transmission layer. The UE repeats the TB across the N·K slots determined for the PUSCH transmission, applying the same symbol allocation in each slot. Otherwise, the same symbol allocation is applied across the N·K consecutive slots and the PUSCH is limited to a single transmission layer. The UE repeats the TB across the N·K consecutive slots applying the same symbol allocation in each slot. If the PUSCH is scheduled by RAR UL grant or by DCI format 0_0 with CRC scrambled by TC-RNTI, the same symbol allocation is applied across the N·K slots determined for the PUSCH transmission and the PUSCH is limited to a single transmission layer. The UE repeats the TB across the N·K slots determined for the PUSCH transmission, applying the same symbol allocation in each slot.

For a PUSCH transmission scheduled by DCI format 0_1, or 0_2, or 0_0 with CRC scrambled by TC-RNTI, or for a PUSCH transmission of a PUSCH repetition Type A scheduled by RAR UL grant, the redundancy version to be applied on the n^th transmission occasion of the TB, where n = 0, 1, ... N·K -1, is determined according REF4.

For PUSCH repetition Type A, a PUSCH transmission in a slot of a multi-slot PUSCH transmission is omitted according to the conditions described in REF3.

For PUSCH repetition Type B, except for PUSCH transmitting CSI report(s) with no transport block, the number of nominal repetitions is given by numberOfRepetitions. For the n-th nominal repetition, n = 0, ..., numberOfRepetitions - 1, the slot where the nominal repetition starts is given by $K_s + \lfloor (S+n \cdot L)/(N_{symb}^{slot}) \rfloor$, and the starting symbol relative to the start of the slot is given by $\mathrm{mod}(S+n \cdot L, N_{symb}^{slot})$. The slot where the nominal repetition ends is given by $K_s + \lfloor (S+(n+1) \cdot L - 1)/(N_{symb}^{slot}) \rfloor$, and the ending symbol relative to the start of the slot is given by $\mathrm{mod}(S+(n+1) \cdot L - 1, N_{symb}^{slot})$. Here $K_S$ is the slot where the PUSCH transmission starts, and $N_{symb}^{slot}$ is the number of symbols per slot as defined in REF1.

For PUSCH repetition Type B, the UE determines invalid symbol(s) for PUSCH repetition Type B transmission as follows: a symbol that is indicated as downlink by tdd-UL-DL-ConfigurationCommon or tdd-UL-DL-ConfigurationDedicated is considered as an invalid symbol for PUSCH repetition Type B transmission. For operation in unpaired spectrum, symbols indicated by ssb-PositionsInBurst in SIB1 or ssb-PositionsInBurst in ServingCellConfigCommon for reception of SS/PBCH blocks are considered as invalid symbols for PUSCH repetition Type B transmission. For a reduced capability half-duplex UE in paired spectrum and for PUSCH repetition Type B transmission, symbols indicated by ssb-PositionsInBurst in SIB1 or ssb-PositionsInBurst in ServingCellConfigCommon for reception of SS/PBCH blocks are considered as invalid symbols for PUSCH repetition Type B transmission. For operation in unpaired spectrum, symbol(s) indicated by pdcch-ConfigSIB1 in MIB for a CORESET for Type0-PDCCH CSS set are considered as invalid symbol(s) for PUSCH repetition Type B transmission. For operation in unpaired spectrum, if numberOfInvalidSymbolsForDL-UL-Switching is configured, numberOfInvalidSymbolsForDL-UL-Switching symbol(s) after the last symbol that is indicated as downlink in each consecutive set of all symbols that are indicated as downlink by tdd-UL-DL-ConfigurationCommon or tdd-UL-DL-ConfigurationDedicated are considered as invalid symbol(s) for PUSCH repetition Type B transmission. The symbol(s) given by numberOfInvalidSymbolsForDL-UL-Switching are defined using the reference SCS configuration reference-SubcarrierSpacing provided in tdd-UL-DL-ConfigurationCommon.

The UE may be configured with the higher layer parameter invalidSymbolPattern, which provides a symbol level bitmap spanning one or two slots (higher layer parameter symbols given by invalidSymbolPattern). A bit value equal to 1 in the symbol level bitmap symbols indicates that the corresponding symbol is an invalid symbol for PUSCH repetition Type B transmission. The UE may be additionally configured with a time-domain pattern (higher layer parameter periodicityAndPattern given by invalidSymbolPattern), where each bit of periodicityAndPattern corresponds to a unit equal to a duration of the symbol level bitmap symbols, and a bit value equal to 1 indicates that the symbol level bitmap symbols is present in the unit. The periodicity AndPattern can be {1, 2, 4, 5, 8, 10, 20 or 40} units long, but maximum of 40 msec. The first symbol of periodicityAndPattern every 40 msec/P periods is a first symbol in frame mod 4 = 0, where P is the duration of periodicityAndPattern-r16 in units of msec. When periodicityAndPattern is not configured, for a symbol level bitmap spanning two slots, the bits of the first and second slots correspond respectively to even and odd slots of a radio frame, and for a symbol level bitmap spanning one slot, the bits of the slot correspond to every slot of a radio frame

If invalidSymbolPattern is configured, when the UE applies the invalid symbol pattern is determined as follows. If the PUSCH is scheduled by DCI format 0_1, or corresponds to a Type 2 configured grant activated by DCI format 0_1, and if invalidSymbolPatternIndicatorDCI-0-1 is configured, if invalid symbol pattern indicator field is set 1, the UE applies the invalid symbol pattern; otherwise, the UE does not apply the invalid symbol pattern. If the PUSCH is scheduled by DCI format 0_2, or corresponds to a Type 2 configured grant activated by DCI format 0_2, and if invalidSymbolPatternIndicatorDCI-0-2 is configured, if invalid symbol pattern indicator field is set 1, the UE applies the invalid symbol pattern; otherwise, the UE does not apply the invalid symbol pattern. In all other cases, the UE also applies the invalid symbol pattern.

If the UE is configured with multiple serving cells within a cell group and is provided with directionalCollisionHandling-r16 = 'enabled' for a set of serving cell(s) among the multiple serving cells, and indicates support of half-DuplexTDD-CA-SameSCS-r16 capability, and is not configured to monitor PDCCH for detection of DCI format 2-0 on any of the multiple serving cells, a symbol indicated to the UE for reception of SS/PBCH blocks in a first cell of the multiple serving cells by ssb-PositionsInBurst in SIB1 or ssb-PositionsInBurst in ServingCellConfigCommon is considered as an invalid symbol for PUSCH repetition Type B transmission in any of the multiple serving cells if the UE is not capable of simultaneous transmission and reception as indicated by simultaneousRxTxInterBandCA among the multiple serving cells, and any one of the cells corresponding to the same band as the first cell, irrespective of any capability indicated by simultaneousRxTxInterBandCA and a symbol is considered as an invalid symbol in another cell among the set of serving cell(s) provided with directionalCollisionHandling-r16 for PUSCH repetition Type B transmission with Type 1 or Type 2 configured grant except for the first Type 2 PUSCH transmission (including all repetitions) after activation if the symbol is indicated as downlink by tdd-UL-DL-ConfigurationCommon or tdd-UL-DL-ConfigurationDedicated on the reference cell as defined in REF3, or the UE is configured by higher layers to receive PDCCH, PDSCH, or CSI-RS on the reference cell in the symbol.

For PUSCH repetition Type B, after determining the invalid symbol(s) for PUSCH repetition type B transmission for each of the K nominal repetitions, the remaining symbols are considered as potentially valid symbols for PUSCH repetition Type B transmission. If the number of potentially valid symbols for PUSCH repetition type B transmission is greater than zero for a nominal repetition, the nominal repetition consists of one or more actual repetitions, where each actual repetition consists of a consecutive set of all potentially valid symbols that can be used for PUSCH repetition Type B transmission within a slot. An actual repetition with a single symbol is omitted except for the case of L=1. An actual repetition is omitted according to the conditions described in REF3. The UE repeats the TB across actual repetitions. The redundancy version to be applied on the $n^{th}$ actual repetition with the counting including the actual repetitions that are omitted is determined according to REF4 where N=1.

For PUSCH repetition Type B, when a UE receives a DCI that schedules aperiodic CSI report(s) or activates semi-persistent CSI report(s) on PUSCH with no transport block by a 'CSI request' field on a DCI, the number of nominal repetitions is assumed to be 1, regardless of the value of numberOfRepetitions. When the UE is scheduled to transmit a PUSCH repetition Type B with no transport block and with aperiodic or semi-persistent CSI report(s) by a 'CSI request' field on a DCI, the first nominal repetition is expected to be the same as the first actual repetition. For PUSCH repetition Type B carrying semi-persistent CSI report(s) without a corresponding PDCCH after being activated on PUSCH by a 'CSI request' field on a DCI, if the first nominal repetition is not the same as the first actual repetition, the first nominal repetition is omitted; otherwise, the first nominal repetition is omitted according to the conditions described in REF3. For PUSCH repetition Type B, when a UE is scheduled to transmit a transport block and aperiodic CSI report(s) on PUSCH by a 'CSI request' field on a DCI, the CSI report(s) is multiplexed only on the first actual repetition. The UE does not expect that the first actual repetition has a single symbol duration.

When two SRS resource sets are configured in srs-ResourceSetToAddModList or srs-ResourceSetToAddModListDCI-0-2 with higher layer parameter usage in SRS-ResourceSet set to 'codebook' or 'noncodebook', for PUSCH repetition Type A, in case K>1, the same symbol allocation is applied across the K consecutive slots and the PUSCH is limited to a single transmission layer. The UE repeats the TB across the K consecutive slots applying the same symbol allocation in each slot, and the association of the first and second SRS resource set in srs-ResourceSetToAddModList or srs-ResourceSetToAddModListDCI-0-2 to each slot is determined as follows: if a DCI format 0_1 or DCI format 0_2 indicates codepoint "00" for the SRS resource set indicator, the first SRS resource set is associated with all K consecutive slots; if a DCI format 0_1 or DCI format 0_2 indicates codepoint "01" for the SRS resource set indicator, the second SRS resource set is associated with all K consecutive slots; if a DCI format 0_1 or DCI format 0_2 indicates codepoint "10" for the SRS resource set indicator, the first and second SRS resource set association to K consecutive slots is determined as follows: when K = 2, the first and second SRS resource sets are applied to the first and second slot of 2 consecutive slots, respectively, when K > 2 and cyclic Mapping in PUSCH-Config is enabled, the first and second SRS resource sets are applied to the first and second slot of K consecutive slots, respectively, and the same SRS resource set mapping pattern continues to the remaining slots of K consecutive slots, when K > 2 and sequentialMapping in PUSCH-Config is enabled, the first SRS resource set is applied to the first and second slots of K consecutive slots, and the second SRS resource set is applied to the third and fourth slot of K consecutive slots, and the same SRS resource set mapping pattern continues to the remaining slots of K consecutive slots. Otherwise, a DCI format 0_1 or DCI format 0_2 indicates codepoint "11" for the SRS resource set indicator, and the first and second SRS resource set association to K consecutive slots is determined as follows, when K = 2, the second and first SRS resource set are applied to the first and second slot of 2 consecutive slots, respectively, when K > 2 and cyclic Mapping in PUSCH-Config is enabled, the second and first SRS resource sets are applied to the first and second slot of K consecutive slots, respectively, and the same SRS resource set mapping pattern continues to the remaining slots of the K consecutive slots, when K > 2 and sequentialMapping in PUSCH-Config is enabled, the second SRS resource set is applied to the first and second slot of K consecutive slots, and the first SRS resource set is applied to the third and fourth slot of K consecutive slots, and the same SRS resource set mapping pattern continues to the remaining slots of the K consecutive slots.

For PUSCH repetition Type B, when two SRS resource sets are configured in srs-ResourceSetToAddModList or srs-ResourceSetToAddModListDCI-0-2 with higher layer parameter usage in SRS-ResourceSet set to 'codebook' or 'noncodebook', the SRS resource set association to nominal PUSCH repetitions follows the same method as SRS resource set association to slots in PUSCH Type A repetition by considering nominal repetitions instead of slots.

For both PUSCH repetition Type A and PUSCH repetition Type B, when a DCI format 0_1 or DCI format 0_2 indicates codepoint "10" or "11" for the SRS resource set indicator, the redundancy version to be applied on the $n^{th}$ transmission occasion for PUSCH repetition Type A of the TB, where n = 0, 1, ... K-1, or $n^{th}$ actual repetition for PUSCH repetition Type B, with the counting including the actual repetitions that are omitted is determined according to REF4. For all PUSCH repetitions associated with the SRS resource set of the first transmission occasion or actual repetition, the redundancy version to be applied is derived according to REF4, where n is counted only considering PUSCH transmission occasions or actual repetitions associated with the same SRS resource set as the first transmission occasion or actual repetition. The redundancy version for PUSCH transmission occasions or actual repetitions that are associated with an SRS resource set other than the SRS resource set of the first transmission occasion or actual repetition is derived according to REF4, where additional shifting operation for each redundancy version $rv_s$ is configured by higher layer parameter sequenceOffsetforRV in PUSCH-Config and n is counted only considering PUSCH transmission occasions or actual repetitions that are not associated with the SRS resource set of the first transmission occasion or actual repetition.

For PUSCH repetition Type A, when a DCI format 0_1 and DCI format 0_2 indicates codepoint "10" or "11" for the SRS resource set indicator and schedules aperiodic CSI report(s) on PUSCH with transport block by a 'CSI request' field on a DCI, the CSI report(s) multiplexing is determined as follows: if higher layer parameter AP-CSI-MultiplexingMode in CSI-AperiodicTriggerStateList is enabled and UCI other than CSI report(s) are not multiplexed on PUSCH, the CSI report(s) is transmitted separately only on the first transmission occasion associated with the first SRS resource set and the first transmission occasion associated with the second SRS resource set. Otherwise, the CSI report(s) is transmitted only on the first transmission occasion. For PUSCH repetition Type B, when a DCI format 0_1 and DCI format 0_2 indicates codepoint "10" or "11" for the SRS resource set indicator and schedules aperiodic CSI report(s) on PUSCH with transport block by a 'CSI request' field on a DCI, CSI report(s) multiplexing is determined as follows: if higher layer parameter AP-CSI-MultiplexingMode in CSI-AperiodicTriggerStateList is enabled and the first actual repetition associated with the first SRS resource set and the first actual repetition associated with the second SRS resource set have the same number of symbols and UCI other than CSI report(s) are not multiplexed on PUSCH, the CSI report(s) is multiplexed separately only on the first actual repetition associated with the first SRS resource set and first actual repetition associated with the second SRS resource set. Otherwise, the CSI report(s) is multiplexed only on the first actual repetition. The UE behavior for other cases including the case of semi-persistent CSI report(s) is described in REF4.

When using configured grants for PUSCH transmissions, the PUSCH resource allocation is semi-statically configured by higher layer parameter configuredGrantConfig in BWP-UplinkDedicated.

For Type 1 PUSCH transmission with a configured grant, several higher layer provided parameters are applied to configure the PUSCH aggregation and/or repetition. For the determination of the PUSCH repetition type, if the higher layer parameter pusch-RepTypeIndicator in rrc-ConfiguredUplinkGrant is configured and set to 'pusch-RepTypeB', then PUSCH repetition type B is applied; otherwise, PUSCH repetition type A is applied. For PUSCH repetition type A, the selection of the time domain resource allocation table follows the rules for DCI format 0_0 on UE specific search space as defined in REF4. For PUSCH repetition type B, the selection of the time domain resource allocation table is as follows: if pusch-RepTypeIndicatorDCI-0-1 in pusch-Config is configured and set to 'pusch-RepTypeB', pusch-TimeDomainResourceAllocationListDCI-0-1 in pusch-Config is used, otherwise, pusch-TimeDomainResourceAllocationListDCI-0-2 in pusch-Config is used. It is not expected that pusch-RepTypeIndicator in rrc-ConfiguredUplinkGrant is configured with 'pusch- RepTypeB' when none of pusch-RepTypeIndicatorDCI-0-1 and pusch-RepTypeIndicatorDCI-0-2 in pusch-Config is set to 'pusch-RepTypeB'.

For Type 2 PUSCH transmissions with a configured grant, the resource allocation follows the higher layer configuration as described by REF5, and UL grant received on the DCI. The PUSCH repetition type and the time domain resource allocation table are determined by the PUSCH repetition type, and the time domain resource allocation table associated with the UL grant received on the DCI, respectively, as defined in REF4. The value of $K_{offset}$, if configured, is applied when determining the first transmission opportunity.

For PUSCH transmissions with a Type 1 or Type 2 configured grant, the number of (nominal) repetitions K to be applied to the transmitted transport block is provided by the indexed row in the time domain resource allocation table if numberOfRepetitions is present in the table, otherwise K is provided by the higher layer configured parameters repK.

Using configured grants, when two SRS resource indicators and two precoding information are provided, the SRS resource set association to (nominal) repetitions is determined as follows. When K = 2, the first and second SRS resource sets are applied to the first and second (nominal) repetitions, respectively. When K > 2 and MappingPattern in ConfiguredGrantConfig is enabled, the first and second SRS resource sets are applied to the first and second (nominal) repetitions, respectively, and the same SRS resource set mapping pattern continues to the remaining (nominal) repetitions. When K > 2 and sequentialMapping in ConfiguredGrantConfig is enabled, first SRS resource set is applied to the first and second (nominal) repetitions, and the second SRS resource set is applied to the third and fourth (nominal) repetitions, and the same SRS resource set mapping pattern continues to the remaining (nominal) repetitions. For PUSCH transmissions with a Type 1 configured grant, when two SRS resource sets are configured in srs-ResourceSetToAddModList or srs-ResourceSetToAddModListDCI-0-2, if configuredGrantConfig contains only one srs-ResourceIndicator and precodingAndNumberOfLayers (applicable when higher layer parameter usage in SRS-ResourceSet set to 'codebook'), PUSCH repetitions are associated only with the first SRS resource set.

For PUSCH transmissions of PUSCH repetition Type A with a Type 1 or Type 2 configured grant, the higher layer parameter repK-RV defines the redundancy version pattern to be applied to the repetitions. If cg-RetransmissionTimer is provided, the redundancy version for uplink transmission with a configured grant is determined by the UE. If the parameter repK-RV is not provided in the configuredGrantConfig and cg-RetransmissionTimer is not provided, the redundancy version for uplink transmissions with a configured grant is set to 0. If the parameter repK-RV is provided in the configuredGrantConfig and cg-RetransmissionTimer is not provided, for the $n^{th}$ transmission occasion among K repetitions, n=1, 2, ..., K, it is associated with $(mod((n-mod(n, N))/N, 4)+1)$th value in the configured RV sequence, where N=1. If a configured grant configuration is configured with startingFromRV0 set to 'off, the initial transmission of a transport block may only start at the first transmission occasion of the K repetitions. Otherwise, the initial transmission of a transport block may start at the first transmission occasion of the K repetitions if the configured RV sequence is {0,2,3,1}, any of the transmission occasions of the K repetitions that are associated with RV=0 if the configured RV sequence is {0,3,0,3}, any of the transmission occasions of the K repetitions if the configured RV sequence is {0,0,0,0}, except the last transmission occasion when K≥8. When the transmission occasions are associated with the first and second SRS resource sets, if the parameter repK-RV is provided in the configuredGrantConfig, for the $n^{th}$ transmission occasion among all transmission occasions that are associated with the SRS resource set of the first transmission occasion, it is associated with $(mod(n-1, 4)+1)$th value in the configured RV sequence, and for the $n^{th}$ transmission occasion among all transmission occasions that are not associated with the SRS resource set of the first transmission occasion, it is associated with $(mod(n-1, 4)+1)$th value in the adjusted RV sequence and the adjustment is based on additional shifting operation on the configured RV sequence, where the shifting operation is defined as $(rv_i+rv_s) \bmod 4$ where $rv_i$ is the $i^{th}$ RV value (i=1, 2, 3, 4) in the configured RV sequence and $rv_s$ is configured by the higher layer parameter sequenceOffsetforRV in configuredGrantConfig. When the transmission occasions are associated with the first and second SRS resource sets, if a configured grant configuration is configured with startingFromRV0 set to 'off, the initial transmission of a transport block may only start at the first transmission occasion of the K repetitions. Otherwise, the initial transmission of a transport block may start at the first transmission occasion associated with RV 0 corresponding to the first or second SRS resource set of the K repetitions if the configured RV sequence is {0,2,3,1}, any of the transmission occasions of the K repetitions that are associated with RV=0 if the configured RV sequence is {0,3,0,3}, any of the transmission occasions of the K repetitions if the configured RV sequence is {0,0,0,0}, except the last transmission occasion when K≥8. After the initial transmission of a transport block, later transmission occasions among the K repetitions associated with any RV value and associated to any of the first or second SRS resource set can be used for transmitting the transport block.

For any RV sequence, the repetitions are terminated after transmitting K repetitions, or at the last transmission occasion among the K repetitions within the period P, or from the starting symbol of the repetition that overlaps with a PUSCH with the same HARQ process scheduled by DCI format 0_0, 0_1 or 0_2, whichever is reached first. In addition, the UE terminates the repetition of a transport block in a PUSCH transmission if the UE receives a DCI format 0_1 with DFI flag provided and set to '1', and if in this DCI the UE detects ACK for the HARQ process corresponding to that transport block.

The UE is not expected to be configured with the time duration for the transmission of K repetitions larger than the time duration derived by the periodicity P. If the UE determines that, for a transmission occasion, the number of symbols available for the PUSCH transmission in a slot is smaller than transmission duration L, the UE does not transmit the PUSCH in the transmission occasion.

For both Type 1 and Type 2 PUSCH transmissions with a configured grant, when K > 1, for unpaired spectrum, if AvailableSlotCounting is enabled, the UE repeats the TB across the N·K slots determined for the PUSCH transmission applying the same symbol allocation in each slot. A slot is not counted in the number of N·K slots if at least one of the symbols indicated by the indexed row of the used resource allocation table in the slot overlaps with a DL symbol indicated by tdd-UL-DL-ConfigurationCommon or tdd-UL-DL-ConfigurationDedicated if provided, or a symbol of an SS/PBCH block with index provided by ssb-PositionsInBurst. Otherwise, the UE repeats the TB across the N·K consecutive slots applying the same symbol allocation in each slot, except if the UE is provided with higher layer parameters cg-nrofSlots and cg-nrofPUSCH-InSlot, in which case the UE repeats the TB in the repK earliest consecutive transmission occasion candidates within the same configuration. For paired spectrum, irrespective of whether AvailableSlotCounting is enabled or not, the UE repeats the TB across the N·K consecutive slots applying the same symbol allocation in each slot, except if the UE is provided with higher layer parameters cg-nrofSlots and cg-nrofPUSCH-InSlot, in which case the UE repeats the TB in the repK earliest consecutive transmission occasion candidates within the same configuration. If AvailableSlotCounting is enabled, and in case of reduced capability half-duplex UE, a slot is not counted in the number of N·K slots if at least one of the symbols indicated by the indexed row of the used resource allocation table in the slot overlaps with or a symbol of an SS/PBCH block with index provided by ssb-PositionsInBurst. A Type 1 or Type 2 PUSCH transmission with a configured grant in a slot is omitted according to the conditions in REF3.

The UE behavior and transmission procedures for PUSCH transmissions of PUSCH repetition type B with a Type 1 or Type 2 configured grant are described in REF4.

With reference to frequency-hopping of PUSCH transmissions for PUSCH repetition Type A scheduled by DCI format 0_1 or 0_2 , a UE is configured for frequency hopping by the higher layer parameter frequencyHoppingDCI-0-2 in pusch-Config for PUSCH transmission scheduled by DCI format 0_2, and by frequencyHopping provided in pusch-Config for PUSCH transmission scheduled by a DCI format other than 0_2, and by frequencyHopping provided in configuredGrantConfig for configured PUSCH transmission. For PUSCH repetition Type A scheduled by RAR UL grant or by DCI format 0_0 with CRC scrambled by TC-RNTI, a UE is configured for frequency hopping by the frequency hopping flag information field of the RAR UL grant, and by the frequency hopping flag information field of DCI format 0_0 with CRC scrambled by TC-RNTI, respectively.

One of two frequency hopping modes can be configured. Intra-slot frequency hopping is applicable to multi-slot configured PUSCH transmission and multi-slot PUSCH transmission scheduled by DCI format 0_1 or 0_2. Note that intra-slot frequency-hopping is also applicable to single slot and to each of multiple PUSCH transmissions scheduled by a DCI if the higher layer parameter pusch-TimeDomainAllocationListForMultiPUSCH is configured. Inter-slot frequency hopping is applicable to multi-slot PUSCH transmission.

In case of resource allocation type 2, the UE transmits PUSCH without frequency hopping. In case of resource allocation type 1, whether or not transform precoding is enabled for PUSCH transmission, the UE may perform PUSCH frequency hopping, if the frequency hopping field in a corresponding detected DCI format is set to 1, or if for a Type 1 PUSCH transmission with a configured grant the higher layer parameter frequencyHoppingOffset is provided, otherwise no PUSCH frequency hopping is performed. When frequency hopping is enabled for PUSCH, the RE mapping is defined in REF1.

For a PUSCH scheduled by DCI format 0_0/0_1 or a PUSCH based on a Type 2 configured UL grant activated by DCI format 0_0/0_1 and for resource allocation type 1, frequency offsets are configured by higher layer parameter frequencyHoppingOffsetLists in pusch-Config. For a PUSCH scheduled by DCI format 0_2 or a PUSCH based on a Type 2 configured UL grant activated by DCI format 0_2 and for resource allocation type 1, frequency offsets are configured by higher layer parameter frequencyHoppingOffsetListsDCI-0-2 in pusch-Config. When the size of the active BWP is less than 50 PRBs, one of two higher layer configured offsets is indicated in the UL grant. When the size of the active BWP is equal to or greater than 50 PRBs, one of four higher layer configured offsets is indicated in the UL grant. For PUSCH based on a Type1 configured UL grant the frequency offset is provided by the higher layer parameter frequencyHoppingOffset in rrc-ConfiguredUplinkGrant.

In case of intra-slot frequency hopping, the starting RB in each hop is given by

$$RB_{start} = \begin{cases} RB_{start} & i=0 \\ (RB_{start}+RB_{offset}) \bmod N_{BWP}^{size} & i=0 \end{cases},$$

Here, i=0 and i=1 are the first hop and the second hop respectively, and $RB_{start}$ is the starting RB within the UL BWP, as calculated from the resource block assignment information of resource allocation type 1 and as further described in REF4 or as calculated from the resource assignment for MsgA PUSCH as described in REF3 and $RB_{offset}$ is the frequency offset in RBs between the two frequency hops. The number of symbols in the first hop is given by $\lfloor N_{symb}^{PUSCH,s}/2 \rfloor$, the number of symbols in the second hop is given by , where $N_{symb}^{PUSCH,s}$ is the length of the PUSCH transmission in OFDM symbols in one slot.

In case of inter-slot frequency hopping and when PUSCH-DMRS-Bundling is not enabled, the starting RB during slot $n_s^{\mu}$ is given by:

$$RB_{start}(n_s^{\mu}) = \begin{cases} RB_{start} & n_s^{\mu} \bmod 2 = 0 \\ (RB_{start}+RB_{offset}) \bmod N_{BWP}^{size} & n_s^{\mu} \bmod 2 = 1 \end{cases},$$

Here, $n_s^{\mu}$ is the current slot number within a radio frame, where a multi-slot PUSCH transmission can take place, $RB_{start}$ is the starting RB within the UL BWP, as calculated from the resource block assignment information of resource allocation type 1 as further described in REF4 and $RB_{offset}$ is the frequency offset in RBs between the two frequency hops.

The UE behavior and transmission procedures for frequency-hopping with PUSCH repetition type B are described in REF4.

With reference to QCL assumptions, if PUSCH repetition Type B as described in REF4 is applied to a physical channel, the UE transmission is such that the channel over which a symbol on the antenna port used for uplink transmission is conveyed can be inferred from the channel over which another symbol on the same antenna port is conveyed if the two symbols correspond to the same actual repetition of a PUSCH transmission with repetition Type B. If intra-slot frequency hopping is not enabled for a physical channel and PUSCH repetition Type B is not applied to the physical channel, the UE transmission is such that the channel over which a symbol on the antenna port used for uplink transmission is conveyed can be inferred from the channel over which another symbol on the same antenna port is conveyed if the two symbols correspond to the same slot. If intra-slot frequency hopping is enabled for a physical channel, the UE transmission is such that the channel over which a symbol on the antenna port used for uplink transmission is conveyed can be inferred from the channel over which another symbol on the same antenna port is conveyed only if the two symbols correspond to the same frequency hop, regardless of whether the frequency hop distance is zero or not.

If DM-RS bundling is applied to PUSCH repetitions, the UE transmission is such that the channel over which a symbol on the antenna port used for uplink transmission is conveyed can be inferred from the channel over which another symbol on the same antenna port is conveyed if the two symbols are transmitted within the same actual time-domain window.

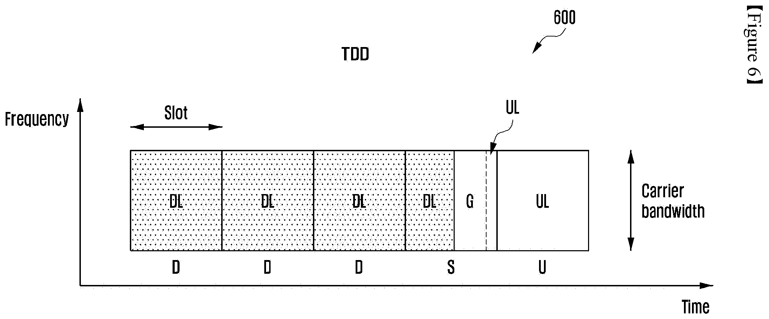

FIGURE 6 illustrates an example UL-DL frame configuration in a TDD communications system 600 according to embodiments of the disclosure. The embodiment of the UL-DL frame configuration in a TDD communications system 600 illustrated in FIGURE 6 is for illustration only. FIGURE 6 does not limit the scope of this disclosure to any particular implementation of the UL-DL frame configuration in a TDD communications system.

5G NR radio supports time-division duplex (TDD) operation and frequency division duplex (FDD) operation. Use of FDD or TDD depends on the NR frequency band and per-country allocations. TDD is required in most bands above 2.5 GHz. FIGURE 6 illustrates an example structure of slots or single-carrier TDD UL-DL frame configuration for a TDD communications system according to the embodiments of the disclosure.

A DDDSU UL-DL configuration is shown, where D denotes a DL slot, U denotes an UL slot, and S denotes a special or switching slot with a DL part, a flexible part that can also be used as guard period G for DL-to-UL switching, and optionally an UL part.

TDD has several advantages over FDD. For example, use of the same band for DL and UL transmissions leads to simpler UE implementation with TDD because a duplexer is not required. Another advantage is that time resources can be flexibly assigned to UL and DL considering an asymmetric ratio of traffic in both directions. DL is typically assigned most time resources in TDD to handle DL-heavy mobile traffic. Another advantage is that channel state information (CSI) can be more easily acquired via channel reciprocity. This reduces an overhead associated with CSI reports especially when there are many antennas or antenna elements.

Although there are advantages of TDD over FDD, there are also disadvantages. A first disadvantage is a smaller coverage of TDD due to the usually small portion of time resources available for UL transmissions, while with FDD all time resources can be used for UL transmissions. Another disadvantage is latency. In TDD, a timing gap between DL reception and UL transmission containing the hybrid automatic repeat request acknowledgement (HARQ-ACK) information associated with DL receptions is typically larger than that in FDD, for example by several milliseconds. Therefore, the HARQ round trip time in TDD is typically longer than that with FDD, especially when the DL traffic load is high. This causes increased UL user plane latency in TDD and can cause data throughput loss or even HARQ stalling when a PUCCH providing HARQ-ACK information needs to be transmitted with repetitions to improve coverage (an alternative in such case is for a network to forgo HARQ-ACK information at least for some transport blocks in the DL).

To address some of the disadvantages for TDD operation, a dynamic adaptation of link direction has been considered where except for some symbols in some slots supporting predetermined transmissions such as for SSBs, symbols of a slot can have flexible transmission direction, e.g., DL or UL, which a UE can determine according to scheduling information for transmissions or receptions. A PDCCH can also be used to provide a DCI format, such as a DCI format 2_0 as described in REF2 and REF3, that can indicate a link direction of some flexible symbols in one or more slots. Nevertheless, in actual deployments, it is difficult for a gNB scheduler to adapt a transmission direction of symbols without coordination with other gNB schedulers in the network. This is because of cross-link interference (CLI) where, for example, DL receptions in a cell by a UE can experience large interference from UL transmissions in the same or neighboring cells from other UEs.

Full-duplex (FD) communications offer a potential for increased spectral efficiency, improved capacity, and reduced latency in wireless networks. When using FD communications, UL and DL signals are simultaneously received and transmitted on fully or partially overlapping, or adjacent, frequency resources, thereby improving spectral efficiency and reducing latency in user and/or control planes.

There are several options for operating a full-duplex wireless communication system. For example, a single carrier may be used such that transmissions and receptions are scheduled on same time-domain resources, such as symbols or slots. Transmissions and receptions on same symbols or slots may be separated in frequency, for example by being placed in non-overlapping sub-bands. An UL frequency sub-band, in time-domain resources that also include DL frequency sub-bands, may be allocated in the center of a carrier, or at the edge of the carrier, or at a selected frequency-domain position of the carrier. The allocations of DL sub-bands and UL sub-bands may partially or fully overlap. A gNB may simultaneously transmit and receive in time-domain resources using same physical antennas, antenna ports, antenna panels and transmitter-receiver units (TRX). Transmission and reception in FD may also occur using separate physical antennas, ports, panels, or TRXs. Antennas, ports, panels, or TRXs may also be partially reused, or only respective subsets can be active for transmissions and receptions when FD communication is enabled.

When a UE receives signals/channels from a gNB on a full-duplex slot or symbol, the receptions may be scheduled in a DL subband of the full-duplex slot or symbol. When full-duplex operation at the gNB uses a DL slot or symbol for scheduling transmissions from the UE using full-duplex transmission and reception at the gNB, there may be one or multiple, such as two, DL subbands on the full-duplex slot or symbol. When a UE is scheduled to transmit on a full-duplex slot or symbol, the transmission may be scheduled in an UL subband of the full-duplex slot or symbol. When full-duplex operation at the gNB uses an UL slot or symbol for purpose of scheduling transmissions to UEs using full-duplex transmission and reception at the gNB, there may be one or multiple, such as two, UL subbands in the full-duplex slot or symbol. Full-duplex operation using an UL subband or a DL subband may be referred to as Subband-Full-Duplex (SBFD).

In the following, for brevity, full-duplex slots/symbols and SBFD slots/symbols may be jointly referred to as SBFD slots/symbol and non-full-duplex slots/symbols and normal DL/UL slot/symbols may be jointly referred to as non-SBFD slots/symbols.

Instead of using a single carrier, it is also possible to use different component carriers (CCs) for receptions and transmissions by a UE. For example, receptions by a UE can occur on a first CC and transmissions by the UE occur on a second CC having a small, including zero, frequency separation from the first CC.

Furthermore, a gNB can operate with full-duplex mode even when a UE still operates in half-duplex mode, such as when the UE can either transmit and receive at a same time, or the UE can also be capable for full-duplex operation.

Full-duplex transmission/reception is not limited to gNBs, TRPs, or UEs, but can also be used for other types of wireless nodes such as relay or repeater nodes.

Full duplex operation needs to overcome several challenges to be functional in actual deployments. When using overlapping frequency resources, received signals are subject to co-channel cross-link interference (CLI) and self-interference. CLI and self-interference cancellation methods include passive methods that rely on isolation between transmit and receive antennas, active methods that utilize RF or digital signal processing, and hybrid methods that use a combination of active and passive methods. Filtering and interference cancellation may be implemented in RF, baseband (BB), or in both RF and BB. While mitigating co-channel CLI may require large complexity at a receiver, it is feasible within current technological limits. Another aspect of FD operation is the mitigation of adjacent channel CLI because in several cellular band allocations, different operators have adjacent spectrum.

Throughout the disclosure, Full-Duplex (FD) is used as a short form for a full-duplex operation in a wireless system. The terms "Cross-Division-Duplex (XDD)" and FD or SBFD can be used interchangeably in the disclosure.

FD operation in NR can improve spectral efficiency, link robustness, capacity, and latency of UL transmissions. In an NR TDD system, UL transmissions are limited by fewer available transmission opportunities than DL receptions. For example, for NR TDD with SCS = 30 kHz, DDDU (2 msec), DDDSU (2.5 msec), or DDDDDDDSUU (5 msec), the UL-DL configurations allow for an DL:UL ratio from 3:1 to 4:1. Any UL transmission can only occur in a limited number of UL slots, for example every 2, 2.5, or 5 msec, respectively.

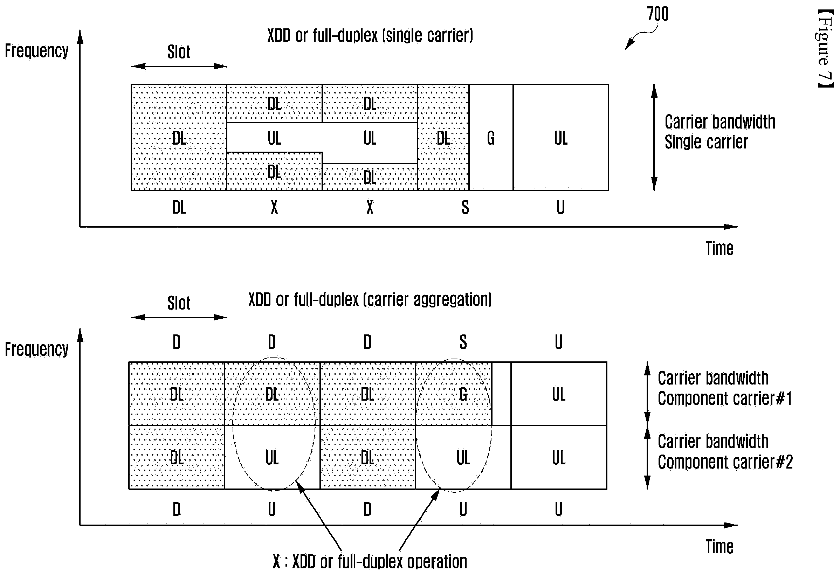

FIGURE 7 illustrates example UL-DL frame configurations in a FD communications system 700 according to embodiments of the disclosure. The embodiment of the UL-DL frame configurations in a full-duplex communications system 700 illustrated in FIGURE 7 is for illustration only. FIGURE 7 does not limit the scope of this disclosure to any particular implementation of the UL-DL frame configuration in a TDD communications system.

FIGURE 7 illustrates two example full-duplex configurations using single- and multi-carrier UL-DL frame configurations according to embodiments of the disclosure

For a single carrier TDD configuration with full-duplex enabled, slots denoted as X are full-duplex or XDD slots. Both DL and UL transmissions can be scheduled in FD slots for at least one or more symbols. The term FD slot is used to refer to a slot where UEs can simultaneously both receive and transmit in at least one or more symbols of the slot if scheduled or assigned radio resources by the base station. A half-duplex UE cannot both transmit and receive simultaneously in a FD slot or on a symbol(s) of a FD slot. When a half-duplex UE is configured for transmission in symbols of a FD slot, another UE can be configured for reception in the symbols of the FD slot. A full-duplex UE can transmit and receive simultaneously in symbols of a FD slot, possibly in presence of other UEs scheduled or assigned resources for either DL or UL in the symbols of the FD slot. Transmissions by a UE in a first FD slot can use same or different frequency-domain resources than in a second FD slot, wherein the resources can differ in bandwidth, a first RB, or a location of the center carrier.

For a carrier aggregation TDD configuration with FD enabled, a UE receives in a slot on CC#1 and transmits in at least one or more symbol(s) of the slot on CC#2. In addition to D slots used only for transmissions/receptions by a gNB/UE, U slots used only for receptions/transmissions by the gNB/UE, and S slots for also supporting DL-UL switching, full-duplex slots with both transmissions/receptions by a gNB or a UE that occur on same time-domain resources, such as slots or symbols, are labeled by X. For the example of TDD with SCS = 30 kHz, single carrier, and UL-DL allocation DXXSU (2.5 msec), the second and third slots allow for full-duplex or SBFD operation. UL transmissions can also occur in a last slot (U) where the full UL transmission bandwidth is available. FD or SBFD slots or FD or SBFD symbol assignments over a period of time and/or a number of slots or symbols can be indicated by a DCI format in a PDCCH reception and can then vary per unit of the time period, or can be indicated by higher layer signaling, such as via a MAC CE or RRC.

When considering UL transmissions in a full-duplex capable wireless communication system several issues of existing state-of-the-art technology need to be overcome.

The example of the single-carrier full-duplex configuration DXXSU as shown in FIGURE 7 is considered in a TDD cell with support for gNB full-duplex operation. The slots are numbered from #1 to #5. For legacy Rel-15 UEs, the gNB configures a common UL-DL frame configuration through SIB1 in this serving cell. No UE-dedicated, e.g., UE-specific RRC UL-DL frame configuration is provided to the UEs by the gNB. SFI, e.g., DCI F2_0 is not configured. Note that this example corresponds to a typical TDD configuration in Rel-15 NR where FG 5-1 is mandatory to support for the UE, but FG 5-1a (UE-specific RRC UL_DL frame configuration) and FG 3-6 (SFI) are optional UE features. Without loss of generality, this example assumes NR operation in n78 (3.5 GHz) and SCS=30 kHz. For simplicity, it is assumed that the UE DL and UL BWPs are configured over the full NR channel BW, e.g., 100 MHz. Any aspects related to guard RBs, transmission power, beamforming, or processing and timing requirements related to PUSCH transmissions in the serving cell using full-duplex transmissions and receptions are ignored.

The gNB can configure the SIB1 TDD-UL-DL-ConfigCommon with {dl-UL-TransmissionPeriodicity, nrofDownlinkSlots, nrofDownlinkSymbols, nrofUplinkSlots, nrofUplinkSymbols} = {P = 2.5ms, 3 DL slots, 12 DL sym, 0 UL sym, 1 UL slot} or DDDS(D)U. Legacy NR UEs therefore consider only the last 2 symbols in slot #4 as flexible symbols (F). This effectively disables the possibility to schedule any UL transmissions for the legacy UEs using the SBFD UL subband in the full-duplex slots #2 and #3.

When legacy UEs are configured with the Rel-15 PUSCH aggregation feature over N = {2, 4 or 8} consecutive slots, any PUSCH transmission coinciding with a DL slot is omitted by the UE. PUSCH can therefore only be transmitted by the UE in UL slot #5 of 2 consecutive frames for N=8, e.g., Rel-15 PUSCH aggregation results in 2 PUSCH repetitions using the normal UL slots.

When the gNB configures SIB1 TDD-UL-DL-ConfigCommon with {P = 2.5ms, 1 DL slot, 0 DL sym, 0 UL sym, 1 UL slot} or DFFFU, UL transmissions with Rel-15 PUSCH aggregation can be scheduled by the gNB using the SBFD UL subband in full-duplex slots #2 and #3. For the aggregated PUSCH transmissions in the SBFD UL subband of full-duplex slots #2 and #3 and in the normal UL slot #5, the same UL BWP configuration and the same frequency-domain resource allocation (FDRA) allocation must be used. The same frequency-hopping behavior must apply. For example, the configured frequency offset must be chosen by the gNB such that the PUSCH allocation computed by the UE for the 2nd hop given by $(RB_{start} + RB_{offset}) \bmod N_{BWP}^{size}$ does not map outside the SBFD UL subband in the full-duplex slots #2 and #3. Legacy UEs can be configured to monitor PDCCH in SBFD slots #2 and #3 because the symbols are considered F, but there can't be PDCCH reception during an ongoing multi-slot PUSCH transmission from the UE. Note that configuration of the first 1 or 2 symbols carrying PDCCH in every SBFD slot as DL instead of F is not possible due to the R15 RRC UL-DL frame configuration pattern design. The UE omits PUSCH transmission in DL slots #1 and #4. Rel-15 PUSCH aggregation therefore results in at most 6 PUSCH transmissions using the SBFD slots #2 and #3 and using the normal UL slot #5 in 2 consecutive frames for N=8.

When the UE is configured with Rel-16 NR PUSCH repetition Type A, the number of repetitions is indicated by DCI by means of an index into the RRC-configured number of repetitions for a row in the Rel-16 TDRA table. Repeated PUSCH transmissions are scheduled over consecutive slots and a PUSCH transmission is omitted by the UE in DL slots #1 and #4. Rel-16 PUSCH repetition Type A results in at most 6 PUSCH transmissions using the SBFD slots #2 and #3 and the normal UL slot #5 in 2 consecutive frames for N=8 like in the case of Rel-15.

When the UE is configured with Rel-17 NR PUSCH repetition Type A, but the Rel-17 NR Available Slot Counting (ASC) feature is disabled, up to 32 instead of 8 repetitions in consecutive (physical) slots can be configured for the UE. The UE omits the PUSCH transmission corresponding to PUSCH repetition Type A in a slot when a PUSCH symbol in a slot conflicts with DL, or when an UL cancellation is received, or when PUSCH must be dropped due to UCI multiplexing rules, e.g., PUCCH. The same considerations as for the Rel-15 PUSCH aggregation case apply. Using Rel-17 PUSCH repetition Type A with ASC disabled, at most 20 PUSCH repetitions can occur for N=32, because the UE will omit PUSCH transmissions in DL slots #1 and #4 in every frame.

When the UE is configured with Rel-17 NR PUSCH repetition Type A and the Rel-17 NR Available Slot Counting (ASC) feature is enabled, the UE does not consider DL slots #1 and #4 as available. Up to 32 repetitions using non-consecutive slots over a period of 10 frames are possible. Note that even if a PUSCH transmission of PUSCH repetition Type A in a slot is considered by the UE as available, a PUSCH transmission may still be (occasionally) dropped when designated condition(s) are met as by REF3. Like in the case of Rel-15 PUSCH aggregation, the Rel-17 PUSCH repetition Type A transmission with ASC enabled must use the same UL BWP configuration and the same FDRA allocation when scheduling the PUSCH transmissions using the SBFD UL subband in the full-duplex slots #2 and #3 and the normal UL slot #5. The same frequency-hopping behavior must apply.

A first issue relates to scheduling of PUSCH transmissions using aggregation and/or repetition with dynamic grants or configured grants.

When Rel-15 PUSCH aggregation or Rel-16/Rel-17 NR PUSCH repetition Type A with or without Available Slot Counting is configured in a TDD serving cell with full-duplex support, PUSCH repetitions can only occur using either the normal UL slots only, or both the full-duplex slots and normal UL slots together, e.g., it is not possible to configure PUSCH repetition only using the full-duplex slots except for a small number of limited cases such as K=2 when 2 consecutive SBFD slots provided. Note that in even when a UE is provided with the configuration(s) of the SBFD UL subbands, e.g., slots / symbols and start / end RBs, existing state-of-the-art allows for PUSCH repetition to be scheduled only using UL or F slots / symbols, so PUSCH aggregation and/or repetition must still occur using either the normal UL slots alone or must use both the full duplex slots and the normal UL slots together. FDRA and/or FH behavior must also be the same for the PUSCH transmissions corresponding to a PUSCH repetition across the full-duplex and the normal UL slots. The SBFD UL subband is usually placed at the center of the operator's channel BW to protect the first adjacent TDD channels from cross-link interference (CLI). The PUSCH transmission corresponding to PUSCH repetition using the SBFD UL subband in full-duplex slots must be allocated to the middle of the channel BW. Therefore, the PUSCH transmission of the PUSCH repetition comprising a full-duplex slot must then also occur in the middle of the channel BW of the normal UL slot.

In consequence, the BW in the normal UL slot available UL scheduling becomes partitioned. Single slot PUSCH transmissions in the normal UL slot cannot be allocated a large contiguous BW anymore which dramatically decreases the achievable UL cell throughput and the UL spectral efficiency. Rel-15 NR UEs are only mandated to support UL resource allocation type 1 with (almost) frequency-contiguous PUSCH allocations. Therefore, a PUSCH frequency allocation for the UEs in good link conditions can only be located either completely below or completely above the center BW occupied by PUSCH transmissions corresponding to PUSCH repetitions comprising a full-duplex slot from UEs in bad link conditions. When the SBFD UL subband comprises around 20% of the channel BW, UEs with good SINR cannot be scheduled more than 40% of the UL scheduling BW in the normal UL slot. Note that the need to schedule PUSCH repetitions in the middle of the channel BW corresponding to the SBFD UL subband arises purely because the PUSCH repetition resulting in the use of both full-duplex slots and the normal UL slots together can't be avoided using existing state-of-the-art. Note that using PUSCH repetition in the serving cell or only with small repetition factors of K=2 instead of K up to 32 to avoid above shortcoming is clearly undesirable, as this greatly reduces the achievable UL radio range. The (theoretical) use of UL resource allocation type 0 using RBG-based allocations results in increased UE complexity. Worse, the need for control of resulting spectral emissions results in additional UL power back-off s of up to several dBs applied by the UE to the corresponding PUSCH transmissions which again greatly reduces the achievable UL radio range because the UE cannot use its maximum UL transmission power anymore. Note that the above shortcomings illustrated for the case of PUSCH repetition Type A also apply to PUSCH repetition Type B.

Therefore, methods and solutions are sought after to improve upon the PUSCH aggregation and/or repetition feature in a wireless communication system supporting full-duplex operation.

The present disclosure addresses the above issues and provides additional design aspects for supporting UL transmissions using PUSCH aggregation, PUSCH repetition and the Available Slot Counting features and provides solutions as fully elaborated in the following.

The disclosure considers methods using common or UE-specific RRC signaling and DCI-based indication to control the UE time-domain transmission behavior of PUSCH transmissions in a PUSCH repetition, methods for available slot counting and determination of candidate slots for PUSCH repetition by the UE, methods using transmission parameters and multiple SLIVs in the TDRA table to control the UE time-domain transmission behavior of PUSCH repetition.

The UE is provided with an RRC configuration using common and/or UE-specific RRC signaling where the UE is configured with a set of allowed or a set of disallowed slots in which PUSCH repetition can occur or cannot occur. The UE can be scheduled using dynamic grants or using configured grants. The UE determines a slot potentially available for PUSCH transmission in the PUSCH repetition using the new provided RRC configuration. The new provided RRC configuration can enable or disable and/or parameterize the use of the full-duplex or the normal UL slots respectively for PUSCH repetition by the UE.

The gNB can configure the UE to only use the normal UL slots (but not the full-duplex slots), or to only use the full-duplex slots (but not the normal UL slots), or to use both the full-duplex and the normal UL slots together for PUSCH repetition. Only a subset of the full-duplex slots and/or a subset of the normal UL slots may be configured as potentially available slots for the PUSCH repetition.

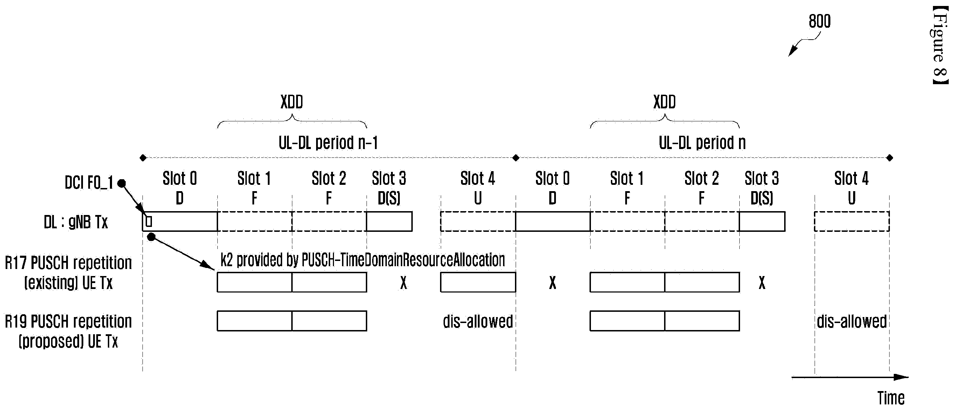

FIGURE 8 illustrates an example PUSCH repetition with a configured set of allowed or set of disallowed slots 800 according to embodiments of the disclosure. The embodiment of the PUSCH repetition with a configured set of allowed or set of disallowed slots 800 illustrated in FIGURE 8 is for illustration only. FIGURE 8 does not limit the scope of this disclosure to any particular implementation of the PUSCH repetition with a configured set of allowed or set of disallowed slots.

An example for the case where PUSCH repetition only uses the full-duplex slots is shown in FIGURE 8. Note that it is not necessary that the use of full-duplex operation by the gNB when scheduling DL receptions and/or UL transmissions in a slot or symbol is identifiable by or known to the UE. Allowed or dis-allowed time-domain resources for the PUSCH repetition can be configured for and/or determined by the UE through several possible means, e.g., using the TDRA table, with reference to a slot/symbol type, using an absolute slot number with respect to a common DL time reference such as SFN and/or using slot/symbol number in a (sub-)frame, using a relative slot/symbol number determined with respect to a timing reference such as a slot/symbol associated with DCI reception or similar, or using a parameter value or setting.

When the use of only normal UL slots for PUSCH repetition is configured for the UE, legacy UE behavior ensues, e.g., the UE transmits the PUSCH of a PUSCH repetition in slots of type U and/or F when scheduled by the gNB unless the PUSCH transmission is omitted as by REF3. When the use of only the full-duplex slots is configured for PUSCH repetition, following gNB scheduling, the UE does not transmit the PUSCH of a PUSCH repetition in slots of type U. The UE determines the potentially available slots for PUSCH transmission in a PUSCH repetition using the new RRC configuration. When the use of both full-duplex and normal UL slots is configured for PUSCH repetition, the UE transmits the PUSCH in slots of type U and/or F subject to gNB scheduling and where the UE determines potentially available slots using the new RRC configuration.

A motivation to configure the allowed (or disallowed) time-domain resources for PUSCH repetition to increase the UL SE and UL peak throughput for UEs in good link conditions without sacrificing the achievable UL radio range for UEs in bad link conditions (or vice versa). When the gNB supports full-duplex operation, additional slots can be made available for PUSCH repetition by UEs to increase their achievable UL radio range or to offset losses from gNB side full-duplex operation when compared to a TDD cell which in practice has fewer (normal) UL slots. Fragmentation of UL scheduling BW in the normal UL slot resulting from the need for placement of the SBFD UL subband in the carrier center when the PUSCH repetition must occur across both the full-duplex and normal UL slots as by existing state-of-the-art is avoided. The maximum number of PUSCH repetitions, e.g., up to 32 can be supported.

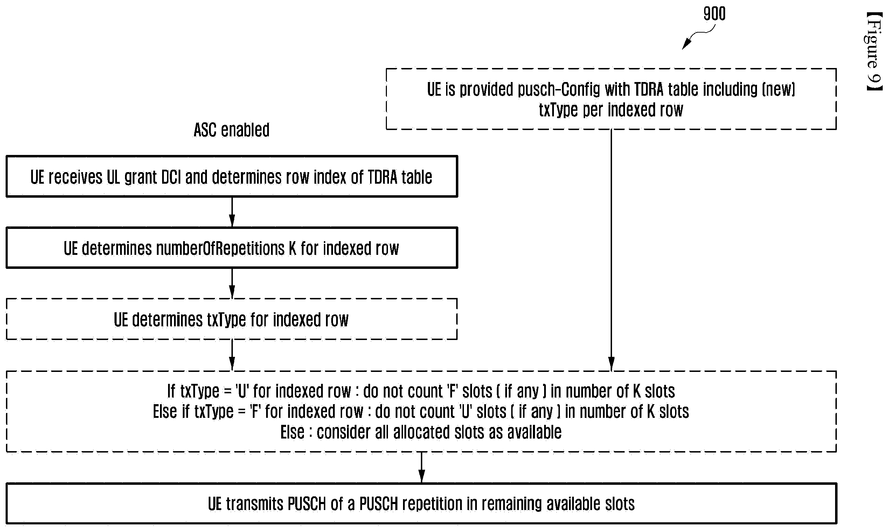

FIGURE 9 illustrates an example UE determination of available slots for PUSCH repetition using TDRA table 900 according to embodiments of the disclosure. The embodiment of the UE determination of available slots for PUSCH repetition using TDRA table 900 illustrated in FIGURE 9 is for illustration only. FIGURE 9 does not limit the scope of this disclosure to any particular implementation of the UE determination of available slots for PUSCH repetition using TDRA table.

In one solution, the UE is provided with an RRC configuration where the UE is configured with a set of allowed or a set of disallowed slots in which PUSCH repetition can occur or cannot occur using the TDRA table. The UE determines potentially available slots for the PUSCH transmission of a PUSCH repetition using the TDRA information field value in the DCI. The UE can be scheduled using dynamic grants or using configured grants. The RRC configuration provided by the PUSCH configuration and/or TDRA table can enable or disable and/or parameterize the use of the full-duplex or the normal UL slots respectively for PUSCH repetition by the UE. For example, the TDRA table may be configured by means of UE-specific RRC signaling provided to the UE in IEs such as IEs PUSCH-TimeDomainResourceAllocation or PUSCH-TimeDomainResourceAllocationList. A default TDRA table may be provided by system specifications. The use of a default TDRA table may be configured by higher layers for the UE.

The UE in a first step determines 'potentially available' slots or symbols for PUSCH transmission in a PUSCH repetition using the provided TDRA table. The UE in a second step determines 'available' slots or symbols for PUSCH transmission in a PUSCH repetition using the configured or provided number of repetitions when scheduled for UL transmission using dynamic grant or when using a configured grant.

In a first example, the TDRA table, e.g., signaled using PUSCH-TimeDomainResourceAllocation and/or PUSCH- TimeDomainResourceAllocationList, provides a parameter, e.g., bit flag(s), setting(s), or value(s) per index row of the table indicating if PUSCH transmission of a PUSCH repetition is enabled or disabled for designated slots. The TDRA table indicates the PUSCH allocation using one symbol allocation per slot, e.g., a SLIV value (or startSymbol and length value pair) for a slot and using a configured numberOfRepetitions for an indexed row in the table. A new parameter txType is provided for an indexed row in the TDRA table. The txType indicates if PUSCH transmission in a PUSCH repetition is enabled or disabled in designated slots. A motivation is that this approach preserves existing state-of-the-art PUSCH configuration for PUSCH repetition, e.g., existing protocol design can be mostly reused with minimum design changes to selectively allow or disallow selected time-domain resources.

For example, txType can designate a slot or symbol as one or a combination of types 'D', 'U', 'F', or 'N/A' with reference to a time-domain pattern with configurable periodicity for a configuration period., e.g., with reference to slot types 'D', F' or 'U' determined using the TDD UL-DL frame configuration(s) and/or using the SFI. In another example, txType can designate a slot or symbol type 'simultaneous Tx-Rx', 'Rx only', or 'Tx only' with reference to the xdd-config. In another example, txType can designate a slot or symbol with reference to a bitmap or a list of slots or symbols (or groups thereof) indicating if PUSCH repetition is enabled or disabled in the time-domain resources where a bitmap or list of slots may be configured separately by RRC, e.g., using the PUSCH configuration. The UE determines the TDRA field value m of the scheduling DCI which provides a row index m + 1 to the allocated TDRA table. Upon reception of the scheduling (UL grant) DCI, the UE determines the numberOfRepetitions and/or txType for the indexed row in the allocated TDRA table. txType may be configured differently in different rows in the TDRA table. No txType may be provided for an indexed row or a default behavior may be defined for an indexed row. For example, a first scheduled PUSCH repetition may be allocated to slot type 'Tx-only' only, whereas the second scheduled PUSCH repetition may then be allocated to slot type 'simultaneous Tx-Rx'.

Note that this solution is conceptually similar, but not identical to the case when PUSCH aggregation/repetition is configured in NR Rel-15 to Rel-17. Using different txType settings per indexed row in the TDRA table, a first scheduled PUSCH repetition, e.g., number of PUSCH repetitions in K virtual or physical slots, when scheduled by DCI can be allocated to different slot types than a second (later) scheduled PUSCH repetition.

The example of the single-carrier full-duplex configuration in FIGURE 7 is considered. The gNB configures SIB1 tdd-UL-DL-ConfigurationCommon as DFFSU. Legacy UEs or UEs not supporting features for enhanced support of (gNB) full-duplex operation determine that any UL transmission(s) when scheduled can only occur in slots #2, #3 and #5. The gNB provides a PUSCH configuration with the TDRA table to the UE using a parameter txType associated with one of or a combination of slot type(s) 'D', 'F', 'U', 'N/A' for an indexed row in the TDRA table. A first indexed row in the TDRA table configures numberOfRepetitions = 4 and txType = 'U' indicating PUSCH transmissions of a PUSCH repetition can occur in normal UL slots, e.g., slots of type 'U', but not in flexible slots. A second indexed row in the TDRA table configures numberOfRepetitions = 8 and txType = 'F' indicating PUSCH transmissions of a PUSCH repetition can occur in in flexible slots, e.g., slots of type 'F', but not in the normal UL slots. The UE receives a first UL grant DCI indicating the first indexed row in the TDRA table through the TDRA index field value in the DCI. The UE determines that the full-duplex slots #2 and #3 are not available for PUSCH transmission of a PUSCH repetition, but slot #5, e.g., the normal UL slot is potentially available. When AvailableSlotCounting is enabled, the UE transmits the first scheduled PUSCH repetition using only slot #5, e.g., over 4 consecutive UL-DL frame configuration periods. After termination of the first PUSCH repetition, the UE receives a second UL grant DCI indicating the second indexed row in the TDRA table through the TDRA index field value in the DCI. The UE determines that the full-duplex slots #2 and #3 are available for PUSCH transmission of a PUSCH repetition, but not slot #5, e.g., the normal UL slot. When AvailableSlotCounting is enabled, the UE transmits the second scheduled PUSCH repetition only using the full-duplex slots #2 and #3, e.g., over 4 consecutive UL-DL frame configuration periods. Note that the UE determination of UL transmission(s) using the full-duplex slots #2 and #3 of the example provided by FIGURE 7 may include additional transmission or reception parameters provided by the PUSCH configuration, such as frequency-domain behavior of a transmission in a full-duplex slot, e.g., start, size and/or end of the SBFD UL subband in the slot or symbol.

The example of the single-carrier full-duplex configuration in FIGURE 7 is considered. The gNB configures SIB1 tdd-UL-DL-ConfigurationCommon as DDDSU. Legacy UEs or UEs not supporting features for enhanced support of (gNB) full-duplex operation determine that any UL transmission(s) when scheduled can only occur in slot #5. The gNB provides a PUSCH configuration with the TDRA table to the UE using a parameter txType associated with a list of disallowed slots for an indexed row in the TDRA table. The list may be explicitly provided using the TDRA table configuration or provided separately using the PUSCH configuration. For illustration purposes, it is assumed that slot numbers start with 0 and are referenced with respect to the slot numbers of the UL-DL frame configuration. A first indexed row in the TDRA table configures numberOfRepetitions = 4 and txType = [4] indicating PUSCH transmissions of a PUSCH repetition can occur in normal UL slots, e.g., slot #5, but not in the other slots. A second indexed row in the TDRA table configures number-OfRepetitions = 8 and txType = [1, 2] indicating PUSCH transmissions of a PUSCH repetition can occur in the full-duplex slots, e.g., slots #2 and #3, but not in the other slots. The UE receives a first UL grant DCI in slot #1, e.g., of type 'D', indicating the first indexed row in the TDRA table through the TDRA index field value in the DCI with the $1^{st}$ slot of the PUSCH transmission scheduled in slot #5. The UE determines that slot #5, e.g., the normal UL slot is potentially available, but all other slots are not available. When AvailableSlotCounting is enabled, the UE transmits the first scheduled PUSCH repetition using only slot #5, e.g., over 4 consecutive UL-DL frame configuration periods. After termination of the first PUSCH repetition, the UE receives a second UL grant DCI in DL slot #1 indicating the second indexed row in the TDRA table through the TDRA index field value in the DCI. The UE determines that the full-duplex slots #2 and #3 are available for PUSCH transmission of a PUSCH repetition, but not slot #1, #4, #5, e.g., including the normal UL slot. When AvailableSlotCounting is enabled, the UE transmits the second scheduled PUSCH repetition only using the full-duplex slots #2 and #3, e.g., over 4 consecutive UL-DL frame configuration periods while not transmitting in the other slots #1, #4, #5. Note that the UE determination of UL transmission(s) using the full-duplex slots #2 and #3 of the example provided by FIGURE 7 may include additional transmission or reception parameters provided by the PUSCH configuration, such as frequency-domain behavior of a transmission in a full-duplex slot, e.g., start, size and/or end of the SBFD UL subband in the slot or symbol.

After the UE determines the potentially available slots or symbols for PUSCH transmission in a PUSCH transmission using the provided TDRA table and using the TDRA information field value in the DCI, the UE determines the available slots for PUSCH transmission in a PUSCH repetition.

The example is considered where only tdd-UL-DL-ConfigurationCommon (but not tdd-UL-DL-Configuration-Dedicated) is provided and the parameter txType associated with an indexed row in the TDRA table uses one of or a combination of slot type(s) 'F-only', 'U-only', 'both F+U'.

When the UE is scheduled to transmit a transport block on PUSCH by a DCI, the 'Time domain resource assignment' field value m of the DCI provides a row index m + 1 to an allocated table. The indexed row defines the slot offset K2, the start and length indicator SLIV, or directly the start symbol S and the allocation length L, the PUSCH mapping type, and the number of repetitions (if numberOfRepetitions is present in the resource allocation table) and the transmission type (if txType is present in the resource allocation table) to be applied in the PUSCH transmission.

The UE first determines the number of repetitions K and number of slots used for TBS determination N, e.g., K is determined as equal to numberOfRepetitions if numberOfRepetitions is present in the resource allocation table; elseif the UE is configured with pusch-AggregationFactor, the number of repetitions K is equal to pusch-AggregationFactor; otherwise K=1. The number of slots used for TBS determination N is equal to 1.

For unpaired spectrum, when AvailableSlotCounting is enabled, the UE determines N·K slots for a PUSCH transmission of a PUSCH repetition scheduled by DCI based on tdd-UL-DL-ConfigurationCommon and ssb-PositionsInBurst, the TDRA information field value in the DCI and txType for the indexed row in the resource allocation table. A slot is not counted in the number of N·K slots for PUSCH transmission of a PUSCH repetition scheduled by DCI if at least one of the symbols indicated by the indexed row of the used resource allocation table in the slot overlaps with a DL symbol indicated by tdd-UL-DL-ConfigurationCommon or a symbol of an SS/PBCH block with index provided by ssb-PositionsInBurst. For a set of symbols of a slot that are indicated to a UE as uplink by tdd-UL-DL-ConfigurationCommon, a slot is not counted in the number of N*K slots for PUSCH transmission of a PUSCH repetition when the indicated txType indicates 'F-only'. For a set of symbols of a slot that are indicated to a UE as flexible by tdd-UL-DL-ConfigurationCommon, a slot is not counted in the number of N*K slots for PUSCH transmission of a PUSCH repetition when the indicated txType indicates 'U-only'. Otherwise, the UE determines N·K consecutive slots for a PUSCH transmission of a PUSCH repetition scheduled by DCI based on the TDRA information field value in the DCI format. Note that the latter corresponds to the case when the AvailableSlotCounting feature is disabled by the gNB or the feature is not supported by the UE.

If AvailableSlotCounting is enabled and a UE would transmit a PUSCH of a PUSCH repetition over N·K slots, and the UE does not transmit the PUSCH of a PUSCH repetition in a slot from the N·K slots, the UE counts the slots in the number of N·K slots as described in REF3. For PUSCH repetition, a PUSCH transmission in a slot of a multi-slot PUSCH transmission is omitted according to the conditions described in REF3.

Alternatively, for unpaired spectrum, when AvailableSlotCounting is disabled and a set of allowed or set of disallowed symbols or slots for the PUSCH repetition is provided by the txType, the UE determines N·K slots for a PUSCH transmission of a PUSCH repetition scheduled by DCI based on the TDRA information field value in the DCI. For a set of symbols of a slot that are indicated to a UE as uplink by tdd-UL-DL-ConfigurationCommon, a slot is not counted in the number of N*K slots for PUSCH transmission of a PUSCH repetition when the indicated txType indicates 'F-only'. For a set of symbols of a slot that are indicated to a UE as flexible by tdd-UL-DL-ConfigurationCommon, a slot is not counted in the number of N*K slots for PUSCH transmission of a PUSCH repetition when the indicated txType indicates 'U-only'. Note that this case corresponds to available slot counting using the separately provided PUSCH configuration independently from the AvailableSlotCounting feature. If AvailableSlotCounting is disabled and the indexed row in the resource allocation table restricts the set of slots for PUSCH transmission in a PUSCH, if a UE would transmit a PUSCH of a PUSCH repetition over N·K slots, and the UE does not transmit the PUSCH of a PUSCH repetition in a slot from the N·K slots, the UE counts the slots in the number of N·K slots as described in REF3.

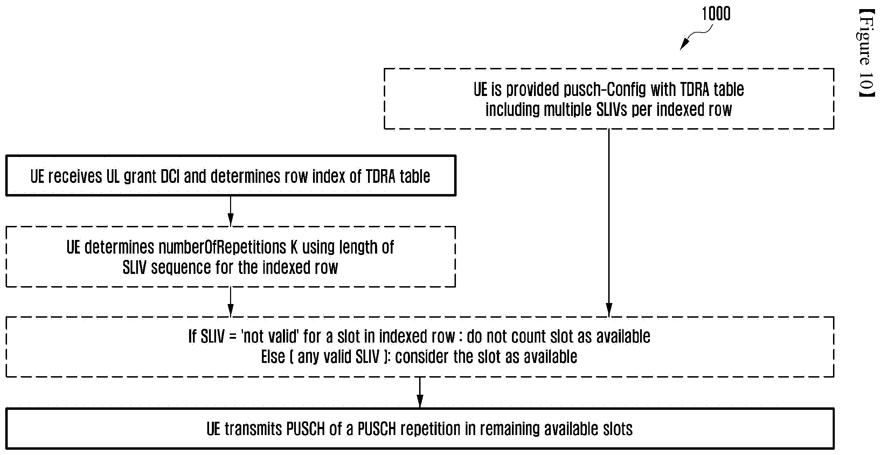

FIGURE 10 illustrates another example UE determination of available slots for PUSCH repetition using the TDRA table 1000 according to embodiments of the disclosure. The embodiment of the UE determination of available slots for PUSCH repetition using TDRA table 1000 illustrated in FIGURE 10 is for illustration only. FIGURE 10 does not limit the scope of this disclosure to any particular implementation of the UE determination of available slots for PUSCH repetition using TDRA table.

In a second example, the TDRA table, e.g., signaled using PUSCH-TimeDomainResourceAllocation and/or PUSCH-TimeDomainResourceAllocationList, provides an indication if PUSCH transmission of a PUSCH repetition is enabled or disabled for designated slots using a sequence or list of symbol allocations in an indexed row of the table, e.g., multiple SLIV values (or multiple startSymbol and length value pairs).

Each provided symbol allocation designates a symbol allocation for a PUSCH transmission of a PUSCH transmission in a slot. One possible setting or value of the symbol allocation in a slot is "invalid" or "skip", e.g., no symbol allocation for PUSCH transmission in the corresponding slot. A sequence or list of symbol allocations in an indexed row of the TDRA table is configured for the PUSCH repetition. The length of the sequence or list of symbol allocations in the indexed row can correspond to the number of repetitions K of the PUSCH repetition using the indexed row of the TDRA table. The length of the sequence or list of symbol allocations may be less than K and the sequence or list is repeated in full and/or partially to match the desired numberOfRepetitions which may be configured separately for an indexed row in the TDRA table or may be configured separately by RRC using pusch-AggregationFactor. A sequence of list of symbol allocations in an indexed row of the TDRA table may be defined with respect to consecutive time-domain resources, or with respect to non-consecutive time-domain resources as by a suitable set of rules. A symbol allocation of type "invalid" or "skip" indicates if PUSCH transmission in a PUSCH repetition is enabled or disabled in designated slots. By configuring the symbol allocation in a suitable way using "invalid" settings, e.g., PUSCH transmission of a PUSCH repetition can be scheduled using either the full-duplex slots only, or the UL slots only, or both full-duplex slots and normal UL slots, or any desired subset of time-domain resources. A motivation is that this approach reuses protocol design features already available in NR, e.g., PUSCH configuration for multi-TTI PUSCH operation, e.g., existing protocol design can be mostly reused with minimum design changes to selectively allow or disallow selected time-domain resources for the purpose of PUSCH repetition.

The UE determines the TDRA field value m of the scheduling DCI which provides a row index m + 1 to the allocated TDRA table. Upon reception of the scheduling (UL grant) DCI, the UE determines the symbol allocations and/or numberOfRepetitions if provided for the indexed row in the allocated TDRA table. Different sequences or lists of symbol allocations may be configured for different rows in the TDRA table. Sequences or lists of different indexed rows in the TDRA table may have different lengths including possible configurations using length = 0, e.g., no valid allocation, or length = 1, e.g., PUSCH transmission using a single slot. Sequences or lists of different indexed rows in the TDRA table may use different values. A restriction and/or constraint imposed on allowed symbol allocation values may be defined. For example, when the UE is configured with PUSCH repetition Type A, the UE expects to be configured only with a single (valid) symbol allocation value other than value "invalid" or "skip" in the sequence or list of symbol allocations of an indexed row in the TDRA table, e.g., a same PUSCH symbol allocation must be used in all slots of a PUSCH repetition except the slots which are to be skipped (as indicated by a symbol allocation value "invalid"). Using different indexed rows and by setting one or more of the symbol allocations in the sequence or list of symbol allocations in the TDRA table to "invalid" or "skip", a first scheduled PUSCH repetition, e.g., number of PUSCH repetitions in K virtual or physical slots, when scheduled by DCI can be allocated to different slot types than a second (later) scheduled PUSCH repetition. For example, a first scheduled PUSCH repetition may be allocated to slot type 'Tx-only' only, whereas the second scheduled PUSCH repetition may then be allocated to slot type 'simultaneous Tx-Rx'.

Note that this solution is conceptually similar, but not identical to the case when multi-TTI PUSCH is scheduled as by NR Rel-16 to Rel-17. Existing state-of-the-art does not currently allow to configure the UE simultaneously with multi-TTI PUSCH, e.g., a different TB is scheduled for each of up to 8 slots using a single DCI, and PUSCH repetition, e.g., a single TB is repeated in up to 32 virtual or physical slots (as by Rel-17). A single symbol allocation must be used when the UE is configured with PUSCH repetition, but a sequence of up to length 8 with possibly different symbol allocations in sequence including a symbol allocation value set to "invalid" can be configured for multi-TTI PUSCH operation.

The example of the single-carrier full-duplex configuration in FIGURE 7 is considered. The gNB configures SIB1 tdd-UL-DL-ConfigurationCommon as DDDSU. Legacy UEs or UEs not supporting features for enhanced support of (gNB) full-duplex operation determine that any UL transmission(s) when scheduled can only occur in slot #5. The gNB provides a PUSCH configuration with the TDRA table to the UE using a sequence, e.g., list, of SLIV values associated with an indexed row in the TDRA table. The number of repetitions corresponding to an indexed row in the TDRA table is implicitly provided by the length of the sequence, e.g., numberOfRepetitions is not used. A first indexed row in the TDRA table configures a sequence of SLIV = [67, N/A, 67, 67, 67, 67] where SLIV value = 67 indicates the PUSCH symbol allocation beginning on the $3^{rd}$ symbol of a slot and 11 consecutive symbols and where SLIV = N/A indicates an invalid symbol allocation value. The PUSCH repetition is configured for 6 consecutive slots (but 1 slot remains unallocated). A second indexed row in the TDRA table configures a sequence of SLIV = [67, N/A, N/A, N/A, N/A, 67]. The PUSCH repetition is also configured for 6 consecutive slots (but 5 slot remain unallocated). For illustration purposes it is assumed that the slot offset K2 is configured with the value 4 for all indexed rows in the TDRA table. Note that a separate value for the slot offset K2 may be configured for each indexed row in the TDRA table in the general case. The UE receives a first UL grant DCI in slot #1, e.g., of type 'D', indicating the first indexed row in the TDRA table through the TDRA index field value in the DCI with the $1^{st}$ slot of the PUSCH transmission scheduled in slot #5, e.g., the normal UL slot. The UE determines that slot #5, e.g., the normal UL slot is potentially available, but the next slot, e.g., carrying SSBs, is unavailable, then the following 4 slots including the full-duplex slots #2 and #3 are potentially available. When AvailableSlotCounting is disabled, the UE transmits the first scheduled PUSCH repetition using both the normal UL slot #5 and the full-duplex slots #2 and #3, e.g., over 2 consecutive UL-DL frame configuration periods. After termination of the first PUSCH repetition, the UE receives a second UL grant DCI in DL slot #1 indicating the second indexed row in the TDRA table through the TDRA index field value in the DCI. The UE determines that PUSCH transmission of a PUSCH repetition can only occur in the normal UL slots, e.g., slot #5 of the current and the next UL-DL configuration period. When AvailableSlotCounting is disabled, the UE therefore transmits the second scheduled PUSCH repetition only using the normal UL slots, e.g., slot #5, while not transmitting in the full-duplex slots #2, #3.. Note that the UE determination of UL transmission(s) using the full-duplex slots #2 and #3 of the example provided by FIGURE 7 may include additional transmission or reception parameters provided by the PUSCH configuration, such as frequency-domain behavior of a transmission in a full-duplex slot, e.g., start, size and/or end of the SBFD UL subband in the slot or symbol.

The example of the single-carrier full-duplex configuration in FIGURE 7 is considered. The gNB configures SIB1 tdd-UL-DL-ConfigurationCommon as DDDSU. Legacy UEs or UEs not supporting features for enhanced support of (gNB) full-duplex operation determine that any UL transmission(s) when scheduled can only occur in slot #5. The gNB provides a PUSCH configuration with the TDRA table to the UE using a sequence, e.g., list, of SLIV values associated with an indexed row in the TDRA table, but the length of the list is limited to L=5. The number of repetitions for an indexed row in the TDRA table is provided by numberOfRepetitions K. A first indexed row in the TDRA table configures K=16 and a sequence of SLIV = [N/A, N/A, 67, 67, 67] where SLIV value = 67 indicates the PUSCH symbol allocation beginning on the $3^{rd}$ symbol of a slot and 11 consecutive symbols and where SLIV = N/A indicates an invalid symbol allocation value. A second indexed row in the TDRA table configures K=8 and a sequence of SLIV = [67, N/A, N/A, N/A, N/A]. For illustration purposes it is assumed that the slot offset K2 is configured with the value 4 for all indexed rows in the TDRA table. The UE receives a first UL grant DCI in slot #1, e.g., of type 'D', indicating the first indexed row in the TDRA table through the TDRA index field value in the DCI with the $1^{st}$ slot of the PUSCH transmission scheduled in slot #5, e.g., the normal UL slot. The UE determines that slot #5, e.g., the normal UL slot is unavailable, the next slot #1, e.g., carrying SSBs, is unavailable, then the following 3 slots #2, #3, #4 including the full-duplex slots #2 and #3 are potentially available. The SLIV sequence is then extended until the number of repetitions K=16 for the indexed row is reached, e.g., slot #5 of the next UL-DL frame period is again determined unavailable etc. When AvailableSlotCounting is disabled, the UE transmits the first scheduled PUSCH repetition using only the full-duplex slots #2 and #3 and the S slot #4 over 3 consecutive UL-DL frame configuration periods. After termination of the first PUSCH repetition, the UE receives a second UL grant DCI in DL slot #1 indicating the second indexed row in the TDRA table through the TDRA index field value in the DCI. The UE determines that PUSCH transmission of a PUSCH repetition can only occur in the normal UL slot, e.g., slot #5. When AvailableSlotCounting is disabled, the UE therefore transmits the second scheduled PUSCH repetition only using the normal UL slots, e.g., slot #5, while not transmitting in the full-duplex slots #2, #3 (nor DL slots #1 carrying SSB or S slot #4). Note that the UE determination of UL transmission(s) using the full-duplex slots #2 and #3 of the example provided by FIGURE 7 may include additional transmission or reception parameters provided by the PUSCH configuration, such as frequency-domain behavior of a transmission in a full-duplex slot, e.g., start, size and/or end of the SBFD UL subband in the slot or symbol.

After the UE determines the potentially available slots or symbols for PUSCH transmission in a PUSCH transmission using the provided TDRA table and using the TDRA information field value in the DCI, the UE determines the available slots for PUSCH transmission in a PUSCH repetition.

The example is considered where only tdd-UL-DL-ConfigurationCommon (but not tdd-UL-DL-Configuration-Dedicated) is provided and the parameter txType associated with an indexed row in the TDRA table uses a sequence or list of symbol allocations in an indexed row of the table, e.g., multiple SLIV values.

When the UE is scheduled to transmit a transport block on PUSCH by a DCI, the 'Time domain resource assignment' field value m of the DCI provides a row index m + 1 to an allocated table. The indexed row defines the slot offset K2, the start and length indicator SLIV, or directly the start symbol S and the allocation length L, the PUSCH mapping type, and the number of repetitions (if numberOfRepetitions is present in the resource allocation table) to be applied in the PUSCH transmission.

If a UE is configured with pusch-TimeDomainAllocationList for PUSCH repetition Type A in which one or more rows contain multiple SLIVs for PUSCH on a UL BWP of a serving cell, the UE does not expect to be configured with pusch-TimeDomainAllocationListForMultiPUSCH.

The UE first determines the number of repetitions K and number of slots used for TBS determination N, e.g., K is determined as equal to numberOfRepetitions if numberOfRepetitions is present in the resource allocation table; elseif the UE is configured with pusch-AggregationFactor, the number of repetitions K is equal to pusch-AggregationFactor; otherwise K=1. The number of slots used for TBS determination N is equal to 1.

For pusch-TimeDomainAllocationList in pusch-Config, each PUSCH of A PUSCH transmission has a separate SLIV and K2. The number of scheduled PUSCHs is signaled by the number of indicated SLIVs in the row of the pusch-TimeDomainAllocationList signaled in DCI format 0_1 or 0_2. When the UE is configured with pusch-TimeDomainAllocationList for PUSCH repetition Type A in which one or more rows contain multiple SLIVs for PUSCH, the UE determines the SLIV value in a slot as mod(K, L) where L is the length of the configured row containing multiple SLIVs. The UE does not expect to be configured with different SLIV values in a row of the resource allocation table except for slots in which the provided SLIV indicates an invalid SLIV. For PUSCH repetition Type A, in case K>1, the same symbol allocation is applied across the K consecutive slots and the PUSCH is limited to a single transmission layer. The UE repeats the TB across the K consecutive slots applying the same symbol allocation in each slot.

For unpaired spectrum, when AvailableSlotCounting is enabled, the UE determines N·K slots for a PUSCH transmission of a PUSCH repetition scheduled by DCI based on tdd-UL-DL-ConfigurationCommon and ssb-PositionsInBurst, the TDRA information field value in the DCI and indicated SLIV(s) for the indexed row in the resource allocation table. A slot is not counted in the number of N·K slots for PUSCH transmission of a PUSCH repetition scheduled by DCI if at least one of the symbols indicated by the indexed row of the used resource allocation table in the slot overlaps with a DL symbol indicated by tdd-UL-DL-ConfigurationCommon or a symbol of an SS/PBCH block with index provided by ssb-PositionsInBurst. For a set of symbols of a slot that are indicated to a UE as uplink or flexible by tdd-UL-DL-ConfigurationCommon, a slot is not counted in the number of N*K slots for PUSCH transmission of a PUSCH repetition when the SLIV value indicates 'not valid'. Otherwise, the UE determines N·K consecutive slots for a PUSCH transmission of a PUSCH repetition scheduled by DCI based on the TDRA information field value in the DCI format. Note that the latter corresponds to the case when the AvailableSlotCounting feature is disabled by the gNB or the feature is not supported by the UE.

If AvailableSlotCounting is enabled and a UE would transmit a PUSCH of a PUSCH repetition over N·K slots, and the UE does not transmit the PUSCH of a PUSCH repetition in a slot from the N·K slots, the UE counts the slots in the number of N·K slots as described in REF3. For PUSCH repetition, a PUSCH transmission in a slot of a multi-slot PUSCH transmission is omitted according to the conditions described in REF3.

Alternatively, for unpaired spectrum, when AvailableSlotCounting is disabled and the UE is configured with pusch-TimeDomainAllocationList for PUSCH repetition Type A in which one or more rows contain multiple SLIVs for PUSCH, the UE determines N·K slots for a PUSCH transmission of a PUSCH repetition scheduled by DCI based on the TDRA information field value in the DCI. For a set of symbols of a slot that are indicated to a UE as uplink or flexible by tdd-UL-DL-ConfigurationCommon, a slot is not counted in the number of N·K slots for PUSCH transmission of a PUSCH repetition when the SLIV value indicates "not valid". Note that this case corresponds to available slot counting using the separately provided PUSCH configuration independently from the AvailableSlotCounting feature. If AvailableSlotCounting is disabled and the indexed row in the resource allocation table restricts the set of slots for PUSCH transmission in a PUSCH, if a UE would transmit a PUSCH of a PUSCH repetition over N·K slots, and the UE does not transmit the PUSCH of a PUSCH repetition in a slot from the N·K slots, the UE counts the slots in the number of N·K slots as described in REF3.

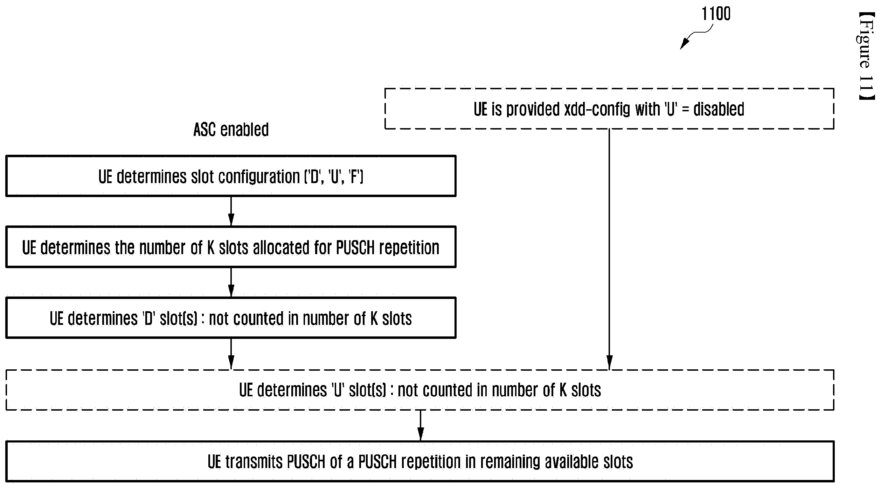

FIGURE 11 illustrates an example UE determination of available slots for PUSCH repetition using common RRC 1100 according to embodiments of the disclosure. The embodiment of the UE determination of available slots for PUSCH repetition using common RRC 1100 illustrated in FIGURE 11 is for illustration only. FIGURE 11 does not limit the scope of this disclosure to any particular implementation of the UE determination of available slots for PUSCH repetition using common RRC.

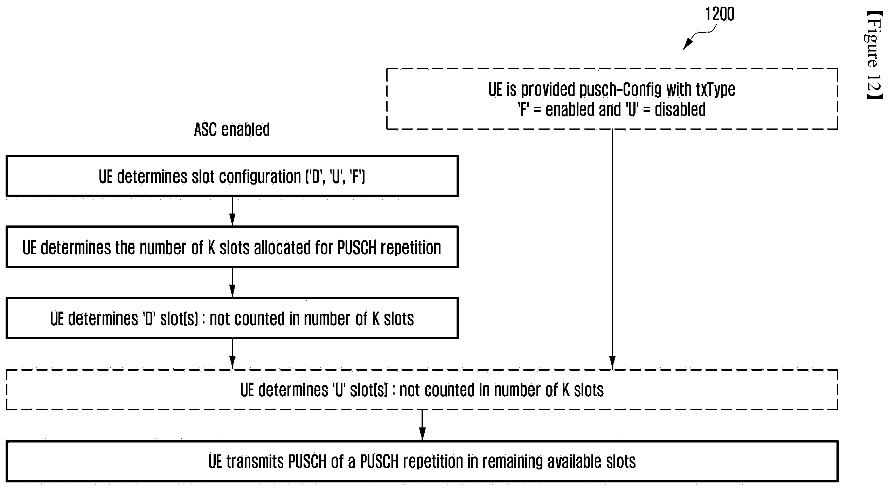

FIGURE 12 illustrates an example UE determination of available slots for PUSCH repetition using UE-specific RRC 1200 according to embodiments of the disclosure. The embodiment of the UE determination of available slots for PUSCH repetition using UE-specific RRC 1200 illustrated in FIGURE 12 is for illustration only. FIGURE 12 does not limit the scope of this disclosure to any particular implementation of the UE determination of available slots for PUSCH repetition using UE-specific RRC.

For brevity and conciseness of description, unless otherwise explicitly noted, providing a parameter value by higher layers includes providing the parameter value by a system information block (SIB), such as a SIB1, or by a common RRC signaling, or by UE-specific RRC signaling.

For brevity and conciseness of description, the higher layer provided TDD UL-DL frame configuration refers to tdd-UL-DL-ConfigurationCommon as example for RRC common configuration and/or tdd-UL-DL-ConfigurationDedicated as example for UE-specific configuration. The UE determines a common TDD UL-DL frame configuration of a serving cell by receiving a system information block (SIB) such as a SIB1 when accessing the cell from RRC_IDLE or by common RRC signaling when the UE is configured with Scell(s) or additional SCG(s) by an IE ServingCellConfigCommon in RRC_CONNECTED. The UE determines a dedicated TDD UL-DL frame configuration using the IE ServingCellConfig when the UE is configured with a serving cell, e.g., add or modify, where the serving cell may be the SpCell or an SCell of an MCG or SCG. A TDD UL-DL frame configuration designates a slot or symbol as one of types 'D', 'U' or 'F' using at least one time-domain pattern with configurable periodicity.

For brevity and conciseness of description, SFI refers to a slot format indicator as example which is configured using higher layer provided IEs such as slotFormatCombination or slotFormatCombinationsPerCell and which is indicated to the UE by group common DCI such as DCI F2_0 where slotFormats are defined in REF3.

For brevity and conciseness of description, the term xdd-config is used to describe the configuration and parameterization for UE determination of DL receptions and/or UL transmissions in a serving cell supporting full-duplex operation. Note that it is not necessary that the use of full-duplex operation by the gNB in the serving cell when scheduling DL receptions and/or UL transmissions in a slot or symbol is identifiable by or known to the UE. For example, parameters associated with the xdd-config may include a set of time-domain resources, e.g., symbol(s)/slot(s), in which DL receptions using an SBFD subband or UL transmissions using an SBFD subband are allowed, possible or disallowed; a range or a set of frequency-domain resources, e.g., serving cell(s), BWP(s), start and/or end or a set of RBs, in which DL receptions using an SBFD subband or UL transmissions using an SBFD subband are allowed, possible or disallowed; one or multiple guard intervals or guard bands for time- and/or frequency domain radio resources during DL receptions or UL transmissions using SBFD subband(s), e.g., guard SCs or RBs, guard symbols; one or multiple resource type(s), e.g., 'simultaneous Tx-Rx', 'Rx only', or 'Tx only' or 'D', 'U', 'F', 'N/A'; one or multiple scheduling behaviors, e.g., "DG only", "CG only", "any". Parameters associated with the xdd-config may include indication(s) or value(s) to determine the (assumed) Tx power settings of DL receptions by the UE, e.g., reference power, target received power, EPRE, or power offset of a designated DL channel/or signal type; to determine the UL transmission power and/or spatial settings by the UE. Configuration and/or parameters associated with the xdd-config may be provided to the UE using higher layer signaling, DCI-based signaling and/or MAC CE based signaling. For example, parameters associated with xdd-config may be provided to the UE by means of common RRC signaling using SIB. In another example, parameters associated with xdd-config may be provided to the UE by means of dedicated RRC signaling such as ServingCellConfig. For example, parameters associated with xdd-config may be provided using the RRC-configured TDRA table and/or DCI-based signaling indicates to the UE which configuration should be applied.

In one solution, the UE is provided with an RRC configuration using common RRC signaling such as a system information block (SIB), e.g., SIB1, where the UE is configured with a set of allowed or a set of disallowed slots in which a PUSCH transmission of a PUSCH repetition can occur or cannot occur.

The UE in a first step determines 'potentially available' slots or symbols for PUSCH transmission in a PUSCH repetition using the provided common RRC configuration. The UE in a second step determines 'available' slots or symbols for PUSCH transmission in a PUSCH repetition using the configured or provided number of repetitions when scheduled for UL transmission using dynamic grant or when using a configured grant.

For determination by the UE of potentially available slots or symbols for PUSCH transmission in a PUSCH repetition using the provided common RRC configuration in the first step, several possibilities exist to provide the indication of allowed or disallowed slots to the UE(s).

In a first example, the xdd-config provided by SIB can designate a slot or symbol as from one or a combination of types 'D', 'U', 'F', or 'N/A' using a time-domain pattern with configurable periodicity for a configuration period. The UE considers symbols in a slot indicated as 'D' by xdd-config to be potentially available for receptions, e.g., no PUSCH transmission can be scheduled, and considers symbols in a slot indicated as 'U' by xdd-config to be potentially available for transmissions, e.g., PUSCH transmissions are possible when scheduled. The UE considers symbols in a slot indicated as 'F' by xdd-config as potentially available for either reception or transmission where gNB scheduling determines the UE transmission or reception behavior. The UE considers symbols in a slot indicated as 'N/A' by xdd-config as unavailable for reception or transmission. The xdd-config is provided separately from tdd-UL-DL-ConfigurationCommon. A first slot or symbol type indicated by xdd-config may be independent from a second slot or symbol type 'D', 'U', 'F' indicated by tdd-UL-DL-ConfigurationCommon when provided for the same time-domain resource. In that case, the UE may rely on proper network configuration to ensure consistency between the first and the second slot or symbol type when both are provided. Alternatively, one of the slot or symbol types has priority, e.g., the slot or symbol type provided by tdd-UL-DL-ConfigurationCommon determines the UE behavior when both types are provided. Furthermore, a slot or symbol configuration of a first type provided by xdd-config may be applied only to some slot or symbol configuration types of the second type, e.g., the slot or symbol type provided by xdd-config may only be applied to symbols or slots not designated as 'D' by tdd-UL-DL-ConfigurationCommon type provided for a same time-domain resource. Note that the latter case is conceptually similar, but not identical to the case when tdd-UL-DL-ConfigurationDedicated is provided to the UE. A motivation is that symbols or slots of type 'U' in tdd-UL-DL-ConfigurationCommon can still be designated by xdd-config as 'unavailable' for PUSCH transmissions even though the tdd-UL-DL-ConfigurationCommon may allow the use of the same time-domain resources for other types of UL transmissions, e.g., PUCCH, SRS, or RACH. Unlike tdd-UL-DL-ConfigurationDedicated which can only provide a UE-specific configuration for symbols or slots designated as 'F' in tdd-UL-DL-ConfigurationCommon, the slot or type assignments provided by xdd-config are not restricted, e.g., even 'D' slots or symbols in tdd-UL-DL-ConfigurationCommon may be used for PUSCH transmission by UEs supporting features for enhanced support of (gNB) full-duplex transmission.

The example of the single-carrier full-duplex configuration in FIGURE 7 is considered. The gNB configures SIB1 tdd-UL-DL-ConfigurationCommon as {dl-UL-TransmissionPeriodicity, nrofDownlinkSlots, nrofDownlinkSymbols, nrofUplinkSlots, nrofUplinkSymbols} = {P = 2.5ms, 3 DL slots, 12 DL sym, 0 UL sym, 1 UL slot} or DDDS(D)U. Accordingly, legacy UEs or UEs not supporting features for enhanced support of (gNB) full-duplex operation determine that any UL transmission(s) when scheduled can only occur in slot #5. When the gNB configures SIB1 xdd-config with N/A-U-U-N/A-U, the UE determines that UL transmission including PUSCH transmission of a PUSCH repetition can occur in slots #2, #3 and #5. When SIB1 xdd-config provides the configuration N/A-U-U-N/A-N/A to the UE, the UE determines that PUSCH transmission of a PUSCH repetition can occur in slots #2 and #3, but not in slot #5. Note that other UL transmissions, e.g., SRS, PUCCH, etc. as listed above may still be scheduled for the UE using the 'U' slot #5. When SIB1 tdd-UL-DL-ConfigurationCommon provides 'DFFSU' while xdd-config provides N/A-U-U-N/A-N/A, the UE also determines that PUSCH transmission when scheduled can occur in slots #2 and #3, but not in slot #5. Note that the UE determination of UL transmission(s) using the full-duplex slots #2 and #3 of the example provided by FIGURE 7 may include additional transmission or reception parameters provided by xdd-config, such as frequency-domain behavior of a transmission in a full-duplex slot, e.g., start, size and/or end of the SBFD UL subband in the slot or symbol.

In a second example, the xdd-config in the SIB provides a parameter, e.g., bit flag(s), setting(s), or value(s), indicating if PUSCH transmission is enabled or disabled for slot types 'D', F' or 'U' indicated by tdd-UL-DL-ConfigurationCommon A slot type indicated by the common RRC configuration may be associated with a single parameter provided by xdd-config and/or multiple such parameters, e.g., one parameter per slot type may be provided. A parameter provided by xdd-config may provide the setting for more than one slot or symbol type. The UE determines symbols in a slot indicated as 'F' by tdd-UL-DL-ConfigurationCommon potentially available for PUSCH transmission when a first parameter provided by xdd-config for PUSCH transmission is set to enabled for a first slot or symbol type 'F', otherwise the UE determines that the corresponding time-domain resource(s) are not available for PUSCH transmission. The xdd-config may provide a second parameter to indicate if PUSCH transmission is set to enabled for a second slot or symbol type 'U' provided by tdd-UL-DL-ConfigurationCommon. The UE determines symbols in a slot indicated as 'U' by tdd-UL-DL-ConfigurationCommon potentially available for PUSCH transmission when a second parameter provided by xdd-config for PUSCH transmission is set to enabled for slot type 'U', otherwise the UE determines that the corresponding time-domain resource(s) are not available for PUSCH transmission.

The example of the single-carrier full-duplex configuration illustrated in FIGURE 7 is considered. The gNB configures SIB1 tdd-UL-DL-ConfigurationCommon as 'DFFSU'. Legacy UEs or UEs not supporting features for enhanced support of (gNB) full-duplex operation determine that any UL transmission(s) when scheduled can only occur in slots #2, #3 and #5. The gNB configures SIB1 xdd-config using a first and a second parameter indicating 'enabled' or 'disabled' for a first slot type 'F' and a second slot type 'U' respectively. The first parameter is set to 'enabled' and the second parameter is set to 'disabled'. The UE determines that the full-duplex slots #2 and #3 are potentially available for PUSCH transmission, but not slot #5, e.g., the normal UL slot. Note that other UL transmissions, e.g., SRS, PUCCH, etc. as listed above may still be scheduled for the UE using the 'U' slot #5. Note that the UE determination of UL transmission(s) using the full-duplex slots #2 and #3 of the example provided by FIGURE 7 may include additional transmission or reception parameters provided by xdd-config, such as frequency-domain behavior of a transmission in a full-duplex slot, e.g., start, size and/or end of the SBFD UL subband in the slot or symbol. A motivation is reduced signaling overhead when configuring time-domain transmission behavior in a TDD cell providing full-duplex support. Existing common RRC signaling providing slot type indications is re-used, but UL transmission behavior for existing slot or symbol types is modified by bit flags.

In a third example, the xdd-config provides a bitmap indicating if PUSCH repetition is enabled or disabled for designated time-domain resources, e.g., slot(s) or symbol(s), associated with full-duplex slot(s) and/or normal UL slot(s). The bitmap can be defined using a fixed length or the bitmap can have a variable length for a suitable configurable periodicity. For example, the length of the bitmap can correspond to the UL-DL frame configuration period or pattern1 period or the combined pattern 1 and/or pattern2 period(s) with reference to tdd-UL-DL-ConfigurationCommon. The UE considers symbols in a slot indicated as 'enabled' by xdd-config to be potentially available for PUSCH transmission. The UE considers symbols in a slot indicated as 'disabled' by xdd-config not to be available for PUSCH transmissions. A bit in the bitmap may indicate transmission settings for a group of symbols or slots. Multiple bitmaps may be provided, e.g., different bitmaps may apply to different types of UL channel(s) or signal(s), e.g., PUCCH, PUSCH, SRS, or PRACH, or different bitmaps may apply to different types of a same UL channel or signal, e.g., a first bitmap for single-slot PUSCH and a second bitmap for multi-slot PUSCH transmission. The xdd-config is provided separately from tdd-UL-DL-ConfigurationCommon. The first slot or symbol type 'enabled' or 'disabled' is provided by xdd-config and a second slot or symbol type 'D', 'U, 'F' is provided by tdd-UL-DL-ConfigurationCommon. There may be an indication of the first and of the second type for a same time-domain resource. Note that only one slot or symbol type may be provided for some time-domain resources. In the case when only one of the slot or symbol types is provided for a time-domain resource, that slot or symbol type is applied by the UE. For example, when only a slot or symbol type 'enabled' is provided for a slot or symbol, the UE assumes DL reception "as if" it was configured with 'U' (and/or 'F') by tdd-UL-DL-Configuration Common. For example, when only a slot or symbol type 'D' is provided for a slot or symbol, the UE assumes DL reception "as if" it was configured as 'disabled' by xdd-config. Furthermore, a slot or symbol configuration of the first type provided by xdd-config may be applied only for some slot or symbol configuration types of the second type, e.g., the slot or symbol type provided by xdd-config may only be applied to symbols or slots not designated as 'D' by tdd-UL-DL-ConfigurationCommon type provided for a same time-domain resource.

The example of the single-carrier full-duplex configuration illustrated in FIGURE 7 is considered. The gNB configures SIB1 tdd-UL-DL-ConfigurationCommon as DFFS(D)U. Legacy UEs or UEs not supporting features for enhanced support of (gNB) full-duplex operation determine that any UL transmission(s) when scheduled can only occur in slots #2, #3 and #5. The gNB configures SIB1 xdd-config using a bitmap with values of 'enabled' or 'disabled' per slot and set to "01100" using length 5 corresponding to the DL-UL allocation period of the common TDD UL-DL frame configuration. The UE determines that the full-duplex slots #2 and #3 are potentially available for PUSCH transmission, but not slot #5, e.g., the normal UL slot. Note that other UL transmissions, e.g., SRS, PUCCH, etc. as listed above may still be scheduled for the UE using the 'U' slot #5. Note that the UE determination of UL transmission(s) using the full-duplex slots #2 and #3 of the example provided by FIGURE 7 may include additional transmission or reception parameters provided by xdd-config, such as frequency-domain behavior of a transmission in a full-duplex slot, e.g., start, size and/or end of the SBFD UL subband in the slot or symbol.

In a fourth example, the xdd-config in the SIB can designate a slot or symbol as one of types 'simultaneous Tx-Rx', 'Rx only', or 'Tx only' using at least one time-domain pattern with configurable periodicity for a configuration period. The UE considers symbols in a slot indicated as 'Rx only' by xdd-config to be potentially available for receptions, e.g., no PUSCH transmission can be scheduled, and considers symbols in a slot indicated as 'Tx only' by xdd-config to be potentially available for transmissions, e.g., PUSCH (or other types of UL) transmissions are possible when scheduled. The UE considers symbols in a slot indicated as 'simultaneous Tx-Rx' by xdd-config as potentially available for either reception or transmission, e.g., the gNB can schedule either DL transmissions or UL receptions in the time-domain resource. The xdd-config is provided separately from tdd-UL-DL-ConfigurationCommon. A first slot or symbol type 'simultaneous Tx-Rx', 'Rx only', or 'Tx only' is indicated by xdd-config and a second slot or symbol type 'D', 'U, 'F' is indicated by tdd-UL-DL-ConfigurationCommon. There may be an indication of the first and of the second type for a same time-domain resource. Note that only one slot or symbol type may be provided for some time-domain resources. In the case, when only one of the slot or symbol types is provided for a time-domain resource, that slot or symbol type is applied by the UE. For example, when only a slot or symbol type 'Rx only' is provided for a slot or symbol, the UE assumes DL reception "as if" it was configured with 'D' (and/or 'F') by tdd-UL-DL-ConfigurationCommon. For example, when only a slot or symbol type 'D' is provided for a slot or symbol, the UE assumes DL reception "as if" it was configured with 'Rx-only' by xdd-config. Furthermore, a slot or symbol configuration of the first type provided by xdd-config may be applied only for some slot or symbol configuration types of the second type, e.g., the slot or symbol type provided by xdd-config may only be applied to symbols or slots not designated as 'D' by tdd-UL-DL-ConfigurationCommon type provided for a same time-domain resource. The xdd-config also provides a parameter, e.g., bit flag(s), bitmap or (set of) value(s), indicating if PUSCH transmission is enabled or disabled for full-duplex slot(s) and/or for normal UL slot(s). For a slot or symbol where the UE determines the first slot or symbol type as 'simultaneous Tx-Rx', e.g., full-duplex slots or symbols, the UE determines the corresponding time-domain resource as potentially available for PUSCH transmission if a first bit flag provided by xdd-config indicates "PUSCH transmission in full-duplex slot(s) or symbol(s)", otherwise the UE determines only 'Tx-only' (or 'U') symbols or slots as potentially available. For slots or symbols where the UE determines the first slot or symbol type as 'Tx-only', e.g., normal UL slots or symbols, the UE determines the corresponding time-domain resource as potentially available for PUSCH transmission if a second bit flag provided by xdd-config indicates "PUSCH transmission in UL slot(s) or symbol(s)". When both the first and the second bit flags are set to enabled, then the UE determines that slots or symbols of types 'simultaneous Tx-Rx' and 'Txs only' are potentially available for UL transmission of PUSCH. A default rule may be used, e.g., the UE may determine that PUSCH transmission in a time-domain resource indicated as 'simultaneous Tx-Rx' (or 'F') symbols or slots are also potentially available when the first bit flag is set to enabled, but UL transmission unless otherwise configured is possible in all 'U' slots.

The example of the single-carrier full-duplex configuration illustrated in FIGURE 7 is considered. The gNB configures SIB1 tdd-UL-DL-ConfigurationCommon as {dl-UL-TransmissionPeriodicity, nrofDownlinkSlots, nrofDownlink-Symbols, nrofUplinkSlots, nrofUplinkSymbols} = {P = 2.5ms, 3 DL slots, 12 DL sym, 0 UL sym, 1 UL slot} or 'DDDSU'. Legacy UEs or UEs not supporting features for enhanced support of (gNB) full-duplex operation determine that any UL transmission(s) when scheduled can only occur in slot #5. When the gNB configures SIB 1 xdd-config with 'Rx-only'-'simultaneous Tx-Rx'-'simultaneous Tx-Rx', 'Rx-only', 'Tx-only', and the first bit flag enabling PUSCH transmission in full-duplex slots is set, but not the second bit flag enabling PUSCH transmission in the normal UL slot, the UE determines that UL transmission of PUSCH in a PUSCH repetition can occur in full-duplex slots #2 and #3. Note that other UL transmissions, e.g., SRS, PUCCH, etc. as listed above may still be scheduled for the UE using the 'U' slot #5. Note that the UE determination of UL transmission(s) using the full-duplex slots #2 and #3 of the example provided by FIGURE 7 may include additional transmission or reception parameters provided by xdd-config, such as frequency-domain behavior of a transmission in a full-duplex slot, e.g., start, size and/or end of the SBFD UL subband in the slot or symbol.

After the UE determines the potentially available slots or symbols for PUSCH transmission in a PUSCH transmission using the provided common RRC configuration, the UE determines the available slots for PUSCH transmission in a PUSCH repetition.

The example is considered where only tdd-UL-DL-ConfigurationCommon (but not tdd-UL-DL-Configuration-Dedicated) and the xdd-config is provided by SIB.

The UE first determines the number of repetitions K and number of slots used for TBS determination N, e.g., K is determined as equal to numberOfRepetitions if numberOfRepetitions is present in the resource allocation table; elseif the UE is configured with pusch-AggregationFactor, the number of repetitions K is equal to pusch-AggregationFactor; otherwise K=1. The number of slots used for TBS determination N is equal to 1.

For unpaired spectrum, when AvailableSlotCounting is enabled, the UE determines N·K slots for a PUSCH transmission of a PUSCH repetition scheduled by DCI based on tdd-UL-DL-ConfigurationCommon, ssb-PositionsInBurst, xdd-config, and the TDRA information field value in the DCI. A slot is not counted in the number of N·K slots for PUSCH transmission of a PUSCH repetition scheduled by DCI if at least one of the symbols indicated by the indexed row of the used resource allocation table in the slot overlaps with a DL symbol indicated by tdd-UL-DL-ConfigurationCommon or a symbol of an SS/PBCH block with index provided by ssb-PositionsInBurst. A slot is not counted in the number of N*K slots for PUSCH transmission of a PUSCH repetition if xdd-config indicates that the slot is not available for PUSCH transmission of a PUSCH repetition. Otherwise, the UE determines N·K consecutive slots for a PUSCH transmission of a PUSCH repetition scheduled by DCI based on the TDRA information field value in the DCI format. Note that the latter corresponds to the case when the AvailableSlotCounting feature is disabled by the gNB or the feature is not supported by the UE.

If AvailableSlotCounting is enabled and a UE would transmit a PUSCH of a PUSCH repetition over N·K slots, and the UE does not transmit the PUSCH of a PUSCH repetition in a slot from the N·K slots, the UE counts the slots in the number of N·K slots as described in REF3. For PUSCH repetition, a PUSCH transmission in a slot of a multi-slot PUSCH transmission is omitted according to the conditions described in REF3.

Alternatively, for unpaired spectrum, when AvailableSlotCounting is disabled and xdd-config is provided, the UE determines N·K slots for a PUSCH transmission of a PUSCH repetition scheduled by DCI based on xdd-config and the TDRA information field value in the DCI. A slot is not counted in the number of N*K slots for PUSCH transmission of a PUSCH repetition if xdd-config indicates that the slot is not available for PUSCH transmission of a PUSCH repetition. Note that this case corresponds to available slot counting using the separately provided xdd-config independently from the AvailableSlotCounting feature. If AvailableSlotCounting is disabled and xdd-config is provided, if a UE would transmit a PUSCH of a PUSCH repetition over N·K slots, and the UE does not transmit the PUSCH of a PUSCH repetition in a slot from the N·K slots, the UE counts the slots in the number of N·K slots as described in REF3.

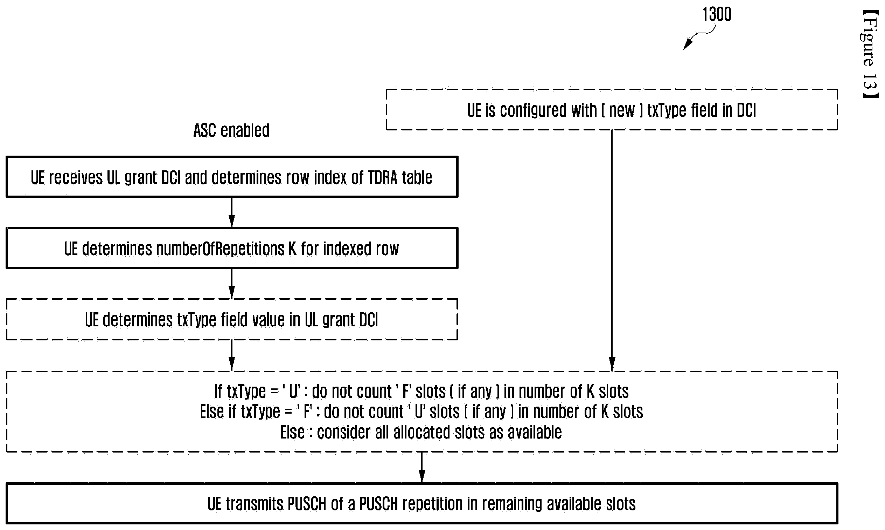

FIGURE 13 illustrates an example UE determination of available slots for PUSCH repetition using DCI 1300 according to embodiments of the disclosure. The embodiment of the UE determination of available slots for PUSCH repetition using DCI 1300 illustrated in FIGURE 13 is for illustration only. FIGURE 13 does not limit the scope of this disclosure to any particular implementation of the UE determination of available slots for PUSCH repetition using DCI.

In one solution, the UE is provided with an indication of a set of allowed or a set of disallowed slots for PUSCH repetition by L1 control signaling such as DCI.

In one example, the DCI contains the TDRA field. An additional new field txType is configured in the DCI. The TDRA field value m of the scheduling DCI provides the row index m + 1 to the allocated TDRA table. The UE uses the new field txType to determine a set of allowed or a set of disallowed slots for PUSCH transmission. For example, txType can designate a slot or symbol as one or a combination of types 'D', 'U', 'F', or 'N/A' with reference to a time-domain pattern with configurable periodicity for a configuration period., e.g., with reference to slot types 'D', F' or 'U' determined using the TDD UL-DL frame configuration(s) and/or using the SFI. In another example, txType can designate a slot or symbol type 'simultaneous Tx-Rx', 'Rx only', or 'Tx only' with reference to the xdd-config. In another example, txType can designate a slot or symbol with reference to a bitmap or a list of slots or symbols (or groups thereof) indicating if PUSCH repetition is enabled or disabled in the time-domain resources where a bitmap or list of slots may be configured separately by RRC, e.g., using the PUSCH configuration. No setting for txType may be provided or a default behavior may be defined. For example, a PUSCH of a first type, e.g., single-slot PUSCH may be allocated to slot type 'Tx-only' or 'U' only, whereas a PUSCH of a second type, e.g., PUSCH repetition Type A may be allocated to slot type 'simultaneous Tx-Rx' or 'both F+U'.

The TDRA field and the new field txType are separate and allow for independent control of the time-domain resource allocation associated with the PUSCH transmission when scheduling the multi-slot PUSCH transmission. The TDRA and the new field txType can have the same length or different lengths. The UE may be configured by higher layer signaling to use indexing into a (smaller) subset of allowed combinations when determining the PUSCH transmission parameters. For example, a single bit may be used for txType where a value of 0 is associated with PUSCH transmission using normal UL slots, e.g., 'Tx only', whereas a value of 1 indicates PUSCH transmissions, possibly subject to the TDRA assignment in slots of both types 'simultaneous Tx-Rx' and 'Tx-only'.

The example of the single-carrier full-duplex configuration in FIGURE 7 is considered. The gNB configures SIB1 tdd-UL-DL-ConfigurationCommon as {dl-UL-TransmissionPeriodicity, nrofDownlinkSlots, nrofDownlinkSymbols, nrofUplinkSlots, nrofUplinkSymbols} = {P = 2.5ms, 3 DL slots, 12 DL sym, 0 UL sym, 1 UL slot} or 'DDDSU'. Legacy UEs or UEs not supporting features for enhanced support of (gNB) full-duplex operation determine that any UL transmission(s) when scheduled can only occur in slot #5. The gNB configures xdd-config with 'Rx-only'-'simultaneous Tx-Rx'-'simultaneous Tx-Rx', 'Rx-only', 'Tx-only' for the UL-DL frame configuration. When the new txType field indicates 'simultaneous Tx-Rx', the UE determines that UL transmission of PUSCH in a PUSCH repetition can occur in full-duplex slots #2 and #3 when the TDRA allocation field scheduled these slots for PUSCH transmission. When the new txType field indicates 'Tx-only', the UE determines that UL transmission of PUSCH can only occur in a normal UL slot, e.g., slot #5, when the TDRA allocation field scheduled these slots for PUSCH transmission. Note that the UE determination of UL transmission(s) using the full-duplex slots #2 and #3 of the example provided by FIGURE 7 may include additional transmission or reception parameters provided by xdd-config, such as frequency-domain behavior of a transmission in a full-duplex slot, e.g., start, size and/or end of the SBFD UL subband in the slot or symbol.

The example of the single-carrier full-duplex configuration in FIGURE 7 is considered. The gNB configures SIB1 tdd-UL-DL-ConfigurationCommon as DFFSU. Legacy UEs or UEs not supporting features for enhanced support of (gNB) full-duplex operation determine that any UL transmission(s) when scheduled can occur in slots #2, #3 and #5. The gNB configures the txType field with length 1. Value 0 indicates default behavior, e.g., UL transmission using 'U' slots only. Value 1 indicates UL transmissions using 'F' slots only, e.g., full-duplex slots. When the new txType field indicates 'UL-only', e.g., value 0, the UE determines that UL transmission of PUSCH in a PUSCH repetition can occur in the normal UL slot, e.g., slot #5 when the TDRA allocation field indicates that this slot is comprised in the time-domain allocation for PUSCH transmission. When the new txType field indicates 'F-only', the UE determines that UL transmission of PUSCH can only occur in slots #2 and #3, e.g., the full-duplex slots when the TDRA allocation field schedules these slots for PUSCH transmission. Note that the UE determination of UL transmission(s) using the full-duplex slots #2 and #3 of the example provided by FIGURE 7 may include additional transmission or reception parameters provided by xdd-config, such as frequency-domain behavior of a transmission in a full-duplex slot, e.g., start, size and/or end of the SBFD UL subband in the slot or symbol.

After the UE determines the potentially available slots or symbols for PUSCH transmission in a PUSCH transmission using the provided TDRA table and using the TDRA information field value in the DCI, the UE determines the available slots for PUSCH transmission in a PUSCH repetition.

The example is considered where only tdd-UL-DL-ConfigurationCommon (but not tdd-UL-DL-Configuration-Dedicated) is provided and the new txType field, e.g., 2 bits, provided by the DCI uses one of or a combination of slot type(s) 'F-only', 'U-only', 'both F+U'.

If a UE is not configured to monitor PDCCH for DCI format 2_0, for a set of symbols of a slot that are indicated as flexible by tdd-UL-DL-ConfigurationCommon if provided, or when tdd-UL- DL-ConfigurationCommon is not provided to the UE, the UE transmits PUSCH in the set of symbols of the slot if the UE receives a corresponding indication by a DCI format 0_0, DCI format 0_1 when the txType field in the scheduling DCI does not indicate 'U-only'.

When the UE is scheduled to transmit a transport block on PUSCH by a DCI, the 'Time domain resource assignment' field value m of the DCI provides a row index m + 1 to an allocated table. The indexed row defines the slot offset K2, the start and length indicator SLIV, or directly the start symbol S and the allocation length L, the PUSCH mapping type, and the number of repetitions (if numberOfRepetitions is present in the resource allocation table) to be applied in the PUSCH transmission. When configured, the transmission type filed provides a slot type allocation for the PUSCH transmission.

The UE first determines the number of repetitions K and number of slots used for TBS determination N, e.g., K is determined as equal to numberOfRepetitions if numberOfRepetitions is present in the resource allocation table; elseif the UE is configured with pusch-AggregationFactor, the number of repetitions K is equal to pusch-AggregationFactor; otherwise K=1. The number of slots used for TBS determination N is equal to 1.

For unpaired spectrum, when AvailableSlotCounting is enabled, the UE determines N·K slots for a PUSCH transmission of a PUSCH repetition scheduled by DCI based on tdd-UL-DL-ConfigurationCommon and ssb-PositionsInBurst, the TDRA information field value in the DCI for the indexed row in the resource allocation table and transmission type field value in the DCI. A slot is not counted in the number of N·K slots for PUSCH transmission of a PUSCH repetition scheduled by DCI if at least one of the symbols indicated by the indexed row of the used resource allocation table in the slot overlaps with a DL symbol indicated by tdd-UL-DL-ConfigurationCommon or a symbol of an SS/PBCH block with index provided by ssb-PositionsInBurst. For a set of symbols of a slot that are indicated to a UE as uplink by tdd-UL-DL-ConfigurationCommon, a slot is not counted in the number of N*K slots for PUSCH transmission of a PUSCH repetition when the indicated transmission type in the DCI indicates 'F-only'. For a set of symbols of a slot that are indicated to a UE as flexible by tdd-UL-DL-ConfigurationCommon, a slot is not counted in the number of N*K slots for PUSCH transmission of a PUSCH repetition when the indicated transmission type in the DCI indicates 'U-only'. Otherwise, the UE determines N·K consecutive slots for a PUSCH transmission of a PUSCH repetition scheduled by DCI based on the TDRA information field value in the DCI format. Note that the latter corresponds to the case when the AvailableSlotCounting feature is disabled by the gNB or the feature is not supported by the UE.

If AvailableSlotCounting is enabled and a UE would transmit a PUSCH of a PUSCH repetition over N·K slots, and the UE does not transmit the PUSCH of a PUSCH repetition in a slot from the N·K slots, the UE counts the slots in the number of N·K slots as described in REF3. For PUSCH repetition, a PUSCH transmission in a slot of a multi-slot PUSCH transmission is omitted according to the conditions described in REF3.

Alternatively, for unpaired spectrum, when AvailableSlotCounting is disabled and a set of allowed or set of disallowed symbols or slots for the PUSCH repetition is indicated by the transmission type in the DCI, the UE determines N·K slots for a PUSCH transmission of a PUSCH repetition scheduled by DCI based on the TDRA information field value in the DCI. For a set of symbols of a slot that are indicated to a UE as uplink by tdd-UL-DL-ConfigurationCommon, a slot is not counted in the number of N*K slots for PUSCH transmission of a PUSCH repetition when the transmission type in the DCI indicates 'F-only'. For a set of symbols of a slot that are indicated to a UE as flexible by tdd-UL-DL-ConfigurationCommon, a slot is not counted in the number of N*K slots for PUSCH transmission of a PUSCH repetition when the transmission type in the DCI indicates 'U-only'. Note that this case corresponds to available slot counting using the separately provided PUSCH configuration independently from the AvailableSlotCounting feature. If AvailableSlotCounting is disabled and the indexed row in the resource allocation table restricts the set of slots for PUSCH transmission in a PUSCH, if a UE would transmit a PUSCH of a PUSCH repetition over N·K slots, and the UE does not transmit the PUSCH of a PUSCH repetition in a slot from the N·K slots, the UE counts the slots in the number of N·K slots as described in REF3.

When common or UE-specific RRC signaling, TDRA table and/or DCI-based indication are used to control the UE time-domain transmission behavior of PUSCH transmissions in a PUSCH repetition and available slot counting for PUSCH repetition, the UE is configured or provided with an indication for a set of allowed or a set of disallowed slots in which PUSCH repetition can occur or cannot occur. A UE may support multiple concurrent PUSCH repetition procedures, e.g., in non-overlapping time-domain resources.

In one solution, the UE provides a capability indication using RRC signaling whereby an indication of the support for multiple concurrent PUSCH repetition procedures and/or the number of supported concurrent PUSCH repetition procedures is provided to the network. When concurrent PUSCH repetition procedures for a same UE are supported, the UE receives a signaling indication from the gNB using common or UE-specific RRC signaling if multiple concurrent PUSCH repetition procedures are enabled or disabled.

The UE may be configured for a first PUSCH repetition using only the normal UL slot(s) (but not the full-duplex slots) and with a second PUSCH repetition using only the full-duplex slots (but not the normal UL slots). The first PUSCH repetition may be configured with a different or a same number of repetitions than the second PUSCH repetition. The first PUSCH repetition using symbols or slots not allocated for the symbol or slot allocation in the second PUSCH repetition occurs concurrently, e.g., in TDM. A motivation is increased UL data rate. It is undesirable to transmit PUSCH repetition across both full-duplex and normal UL slots because the SBFD UL subband in the center fragments UL scheduling BW in the normal UL slot and greatly reduces UL SE and peak rates in the normal UL slot. When PUSCH repetition is configured to only use the full-duplex slots, assuming DDDSU, 20% of UL transmission resources can't be used by the UE.

For example, the UE signals its support for and/or the number of supported concurrent PUSCH repetition procedures in non-overlapping time-domain resources using the (UL) UECapabilityInformation message. When concurrent PUSCH repetition procedures are supported by the UE, the UE determines from the PUSCH configuration, e.g., using IEs such as pusch-Config or ServingCellConfig if concurrent PUSCH repetition procedures are enabled for UL scheduling and/or the maximum number of concurrent PUSCH repetition procedures and/or PUSCH transmission parameters such as MCS table(s), spatial domain configuration(s), or UL transmit power configuration(s). The UE does not expect to be scheduled with PUSCH transmission of a first PUSCH repetition in symbols or slots where PUSCH transmission of a second PUSCH repetition is configured.

As can be seen by someone skilled-in-the-art, the above solutions exemplified for the case of scheduling using dynamic grants extend to the case of scheduling using configured grants. For Type 1 PUSCH transmission with a configured grant, several higher layer provided parameters are applied to configure the PUSCH aggregation and/or repetition. For Type 2 PUSCH transmissions with a configured grant, the resource allocation follows the higher layer configuration as described by REF5, and UL grant received on the DCI. The PUSCH repetition type and the time domain resource allocation table are determined by the PUSCH repetition type, and the time domain resource allocation table associated with the UL grant received on the DCI, respectively, as defined in REF4. Solutions and examples described for the case of configuring an allowed set or a disallowed set of time-domain resources for PUSCH repetition using common, UE-specific RRC signaling, TDRA tables or DCI-based indication can be applied with suitable modifications, e.g., providing the corresponding IEs or fields describe for the examples using dynamic grants in rrc-ConfiguredUplinkGrant.

The example of Type 2 configured grant is considered where only tdd-UL-DL-ConfigurationCommon (but not tdd-UL-DL-ConfigurationDedicated) is provided and the parameter txType associated with an indexed row in the TDRA table configured by rrc-ConfiguredUplinkGrant uses one of or a combination of slot type(s) 'F-only', 'U-only', 'both F+U'.

For PUSCH transmissions with a Type 2 configured grant, the number of (nominal) repetitions K to be applied to the transmitted transport block is provided by the indexed row in the time domain resource allocation table if number-OfRepetitions is present in the table, otherwise K is provided by the higher layer configured parameters repK. The UE is not expected to be configured with the time duration for the transmission of K repetitions larger than the time duration derived by the periodicity P. If the UE determines that, for a transmission occasion, the number of symbols available for the PUSCH transmission in a slot is smaller than transmission duration L, the UE does not transmit the PUSCH in the transmission occasion.

For Type 2 PUSCH transmissions with a configured grant, when K > **1,** for unpaired spectrum, if Available-SlotCounting is enabled, the UE repeats the TB across the N·K slots determined for the PUSCH transmission applying the same symbol allocation in each slot. A slot is not counted in the number of N·K slots if at least one of the symbols indicated by the indexed row of the used resource allocation table in the slot overlaps with a DL symbol indicated by tdd-UL-DL-ConfigurationCommon if provided, or a symbol of an SS/PBCH block with index provided by ssb-PositionsInBurst. For a set of symbols of a slot that are indicated to a UE as uplink by tdd-UL-DL-ConfigurationCommon, a slot is not counted in the number of N*K slots for PUSCH transmission of a PUSCH repetition when the indicated txType indicates 'F-only'. For a set of symbols of a slot that are indicated to a UE as flexible by tdd-UL-DL-ConfigurationCommon, a slot is not counted in the number of N·K slots for PUSCH transmission of a PUSCH repetition when the indicated txType indicates 'U-only'. Otherwise, the UE repeats the TB across the N·K consecutive slots applying the same symbol allocation in each slot, except if the UE is provided with higher layer parameters cg-nrofSlots and cg-nrofPUSCH-InSlot, in which case the UE repeats the TB in the repK earliest consecutive transmission occasion candidates within the same configuration.

As can be seen by someone skilled-in-the-art, the above solutions exemplified for the case of PUSCH repetition Type A extend to the case of PUSCH repetition Type B with suitable modifications.

As can be seen by someone skilled-in-the-art, solutions and examples described for the case of configuring an allowed set or a disallowed set of time-domain resources for PUSCH repetition using common, UE-specific RRC signaling, TDRA tables or DCI-based indication based on tdd-UL-DL-ConfigurationCommon and xdd-config, e.g., determination of symbol or slot types 'D', 'F', 'U' are easily extended to the case where tdd-UL-DL-ConfigurationDedicated and/or SFI are provided to the UE. The UE determines a slot and symbol type as described in REF3. For example, the tdd-UL-DL-ConfigurationDedicated if provided only allows to assign symbols or slots of type 'F' in pattern1/patterns2 of tdd-UL-DL-ConfigurationCommon. The UE can determine slot and symbol types in a variety of ways, but for any given slot or symbol determines a single value 'D', 'F', 'U'. Similarly, configuration of slot or symbol types provided by xdd-config uses slot or symbols of types "Tx-only", 'Rx-only', "simultaneous Tx-Rx' for illustration purposes and to simplify exemplary descriptions. Other suitable symbol or slot designations may serve the same purpose as described without loss of functionality.

The above flowcharts illustrate example methods that can be implemented in accordance with the principles of the present disclosure and various changes could be made to the methods illustrated in the flowcharts herein. For example, while shown as a series of steps, various steps in each figure could overlap, occur in parallel, occur in a different order, or occur multiple times. In another example, steps may be omitted or replaced by other steps.

Although the figures illustrate different examples of user equipment, various changes may be made to the figures. For example, the user equipment can include any number of each component in any suitable arrangement. In general, the figures do not limit the scope of this disclosure to any particular configuration(s). Moreover, while figures illustrate operational environments in which various user equipment features disclosed in this patent document can be used, these features can be used in any other suitable system.

Although the present disclosure has been described with exemplary embodiments, various changes and modifications may be suggested to one skilled in the art. It is intended that the present disclosure encompass such changes and modifications as fall within the scope of the appended claims. None of the description in this application should be read as implying that any particular element, step, or function is an essential element that must be included in the claims scope. The scope of patented subject matter is defined by the claims.

Aspects of the present disclosure may also be learned from the following clauses.

Clause 1. A method performed by a user equipment (UE) in a communication system, the method comprising: receiving:

first information for first parameters that include a first time-domain resource allocation (TDRA) table associated with a first subset of slots from a set of slots on acell, and
second information for second parameters that include a second TDRA table associated with a second subset of slots from the set of slots on the cell;

determining:

a first TDRA entry from the first TDRA table, and
a second TDRA entry from the second TDRA table; and

transmitting:

a first repetition of a physical uplink shared channel (PUSCH) in a first slot from the first subset of slots on the cell based on the first TDRA entry, and
a second repetition of the PUSCH in a second slot from the second subset of slots on the cell based on the second TDRA entry.

Clause 2. The method of Clause 1, wherein:

the first information for the first parameters includes a first modulation and coding scheme (MCS) table,
the second information for the second parameters includes a second MCS table,
transmitting the first repetition of the PUSCH in the first slot from the first subset of slots further comprises transmitting the first repetition of the PUSCH based on the first MCS table, and
transmitting the second repetition of the PUSCH in the second slot from the second subset of slots further comprises transmitting the second repetition of the PUSCH based on the second MCS table.

Clause 3. The method of Clause 1, further comprising:
determining:

a first power based on a first value of a target received power, and
a second power based on a second value of the target received power,
wherein:

transmitting the first repetition of the PUSCH further comprises transmitting the first repetition using the first power,
transmitting the second repetition of the PUSCH further comprises transmitting the second repetition using the second power,
the first parameters include the first value of the target received power, and
the second parameters include the second value of the target received power.

Clause 4. The method of Clause 1, further comprising:
receiving:

a first reference signal (RS) in a slot that is from the first subset of slots, and
a second RS in a slot that is not from the first subset of slots; and determining:

a first spatial filter based on the first RS, and
a second spatial filter based on the second RS,
wherein:

transmitting the first repetition of the PUSCH further comprises transmitting the first repetition of the PUSCH using the first spatial filter, and

transmitting the second repetition of the PUSCH further comprises transmitting the second repetition of the PUSCH using the second spatial filter.

Clause 5. A user equipment (UE) in a communication system, the UE comprising:

a transceiver;
a processor coupled with the transceiver and configured to:
receive first information for first parameters that include a first time-domain resource allocation (TDRA) table associated with a first subset of slots from a set of slots on a cell,
receive second information for second parameters that include a second TDRA table associated with a second subset of slots from the set of slots on the cell,
determine a first TDRA entry from the first TDRA table,
determine a second TDRA entry from the second TDRA table,
transmit a first repetition of a physical uplink shared channel (PUSCH) in a first slot from the first subset of slots on the cell based on the first TDRA entry, and
transmit a second repetition of the PUSCH in a second slot from the second subset of slots on the cell based on the second TDRA entry.

Clause 6. The UE of Clause 5, wherein:

the first information for the first parameters includes a first modulation and coding scheme (MCS) table,
the second information for the second parameters includes a second MCS table, and
the transceiver is further configured to:

transmit the first repetition of the PUSCH based on the first MCS table, and
transmit the second repetition of the PUSCH based on the second MCS table.

Clause 7. The UE of Clause 5, wherein:

the processor is further configured to:
determine a first power based on a first value of a target received power, and determine a second power based on a second value of the target received power;
the transceiver is further configured to:

transmit the first repetition using the first power, and
transmit the second repetition using the second power;
the first parameters include the first value of the target received power; and
the second parameters include the second value of the target received power.

Clause 8. The UE of Clause 5, wherein:

the transceiver is further configured to:

receive a first reference signal (RS) in a slot that is from the first subset of slots, and
receive a second RS in a slot that is not from the first subset of slots;

the processor is further configured to:
determine a first spatial filter based on the first RS, and
determine a second spatial filter based on the second RS; and
the transceiver is further configured to:
transmit the first repetition of the PUSCH using the first spatial filter, and
transmit the second repetition of the PUSCH using the second spatial filter.

Clause 9. A method performed by a base station (BS) in a communication system, the method comprising:

transmitting first information for first parameters that include a first time-domain resource allocation (TDRA) table associated with a first subset of slots from a set of slots on a cell;
transmitting second information for second parameters that include a second TDRA table associated with a second subset of slots from the set of slots on the cell;
determining a first TDRA entry from the first TDRA table;
determining a second TDRA entry from the second TDRA table;
receiving a first repetition of a physical uplink shared channel (PUSCH) in a first slot from the first subset of slots on the cell based on the first TDRA entry; and
receiving a second repetition of the PUSCH in a second slot from the second subset of slots on the cell based on the second TDRA entry.

Clause 10. The method of Clause 9, wherein:

the first information for the first parameters includes a first modulation and coding scheme (MCS) table,
the second information for the second parameters includes a second MCS table, and
the transceiver is further configured to:

receive the first repetition of the PUSCH based on the first MCS table, and
receive the second repetition of the PUSCH based on the second MCS table.

Clause 11. The method of Clause 9, wherein:

the first parameters include a first value of a target received power for the first repetition; and
the second parameters include a second value of the target received power for the second repetition.

Clause 12. The method of Clause 9, further comprising:

transmitting a first reference signal (RS) in a slot that is from the first subset of slots; and
transmitting a second RS in a slot that is not from the first subset of slots, wherein:

the first RS indicates a first spatial filter for the first repetition; and
the second RS indicates a second spatial filter for the second repetition.

Clause 13. A base station (BS) in a communication system, the BS comprising:

a transceiver;
a controller coupled with the transceiver and configured to:
transmit first information for first parameters that include a first time-domain resource allocation (TDRA) table associated with a first subset of slots from a set of slots on a cell,
transmit second information for second parameters that include a second TDRA table associated with a second subset of slots from the set of slots on the cell,
determine a first TDRA entry from the first TDRA table,
determine a second TDRA entry from the second TDRA table,
receive a first repetition of a physical uplink shared channel (PUSCH) in a first slot from the first subset of slots on the cell based on the first TDRA entry, and
receive a second repetition of the PUSCH in a second slot from the second subset of slots on the cell based on the second TDRA entry.

Clause 14. The BS of Clause 13, wherein:

the first information for the first parameters includes a first modulation and coding scheme (MCS) table,
the second information for the second parameters includes a second MCS table, and
the transceiver is further configured to:

receive the first repetition of the PUSCH based on the first MCS table, and
receive the second repetition of the PUSCH based on the second MCS table.

Clause 15. The BS of Clause 13, wherein:

the first parameters include a first value of a target received power for the first repetition; and
the second parameters include a second value of the target received power for the second repetition, or

wherein:
the transceiver is further configured to:

transmit a first reference signal (RS) in a slot that is from the first subset of slots, and
transmit a second RS in a slot that is not from the first subset of slots;
the first RS indicates a first spatial filter for the first repetition; and
the second RS indicates a second spatial filter for the second repetition.

**Claims**

1.  A method performed by a terminal in a communication system, the method comprising:

    receiving, from a base station, subband full duplex, SBFD, configuration indicating whether a physical uplink shared channel, PUSCH, repetition is allowed within SBFD resources only, or within non-SBFD resources only, or across the SBFD resources and the non-SBFD resources;
    receiving, from the base station, configuration on the PUSCH repetition, the configuration on the PUSCH repetition including a number of repetitions;
    identifying available resources for the PUSCH repetition based on the SBFD configuration and the configuration on the PUSCH repetition; and
    transmitting, to the base station, PUSCHs repeatedly based on the available resources.

2.  A terminal in a communication system, the terminal comprising:

    at least one transceiver;
    at least one processor communicatively coupled to the at least one transceiver; and
    at least one memory, communicatively coupled to the at least one processor, storing instructions executable by the at least one processor individually or in any combination to cause the terminal to:

    receive, from a base station, subband full duplex, SBFD, configuration indicating whether a physical uplink shared channel, PUSCH, repetition is allowed within SBFD resources only, or within non-SBFD resources only, or across the SBFD resources and the non-SBFD resources,
    receive, from the base station, configuration on the PUSCH repetition, the configuration on the PUSCH repetition including a number of repetitions,
    identify available resources for the PUSCH repetition based on the SBFD configuration and the configuration on the PUSCH repetition, and
    transmit, to the base station, PUSCHs repeatedly based on the available resources.

3.  The method of claim 1 or the terminal of claim 2, wherein the SBFD configuration is configured in a time division duplex, TDD, carrier.

4.  The method of claim 1 or the terminal of claim 2, wherein the available resources are configured as the SBFD resources or non-SBFD resources via radio resource control, RRC, signaling.

5.  The method of claim 1 or the terminal of claim 2, wherein the available resources are indicated as the SBFD resources or non-SBFD resources by downlink control information, DCI, for activating a PUSCH transmission.

6.  The method of claim 1 or the terminal of claim 2, wherein unavailable resources are not counted for the PUSCH repetition.

7.  A method performed by a base station in a communication system, the method comprising:

    transmitting, to a terminal, subband full duplex (SBFD) configuration indicating whether a physical uplink shared channel (PUSCH) repetition is allowed within SBFD resources only, or within non-SBFD resources only, or across the SBFD resources and the non-SBFD resources;
    transmitting, to the terminal, configuration on the PUSCH repetition, the configuration on the PUSCH repetition including a number of repetitions; and
    receiving, from the terminal, PUSCHs repeatedly on available resources,

wherein the available resources for the PUSCH repetition are based on the SBFD configuration and the configuration on the PUSCH repetition.

8. A base station in a communication system, the base station comprising:

at least one transceiver;
at least one processor communicatively coupled to the at least one transceiver; and
at least one memory, communicatively coupled to the at least one processor, storing instructions executable by the at least one processor individually or in any combination to cause the base station to
transmit, to a terminal, subband full duplex, SBFD, configuration indicating whether a physical uplink shared channel, PUSCH, repetition is allowed within SBFD resources only, or within non-SBFD resources only, or across the SBFD resources and the non-SBFD resources,
transmit, to the terminal, configuration on the PUSCH repetition, the configuration on the PUSCH repetition including a number of repetitions, and
receive, from the terminal, PUSCHs repeatedly on available resources,
wherein the available resources for the PUSCH repetition are based on the SBFD configuration and the configuration on the PUSCH repetition.

9. The method of claim 7 or the base station of claim 8, wherein the SBFD configuration is configured in a time division duplex, TDD, carrier.

10. The method of claim 7 or the base station of claim 8, wherein the available resources are configured as the SBFD resources or non-SBFD resources via radio resource control, RRC, signaling.

11. The method of claim 7 or the base station of claim 8, wherein the available resources are indicated as the SBFD resources or non-SBFD resources by downlink control information, DCI, for activating a PUSCH transmission.

12. The method of claim 7 or the base station of claim 8, wherein unavailable resources are not counted for the PUSCH repetition.

【Figure 1】

【Figure 2】

【Figure 3】

【Figure 4】

【Figure 5】

500

FROM
CHANNEL → | DC |(555) → | REMOVE CYCLIC PREFIX |(560) → | S-TO-P |(565) → | SIZE N FFT |(570) → | P-TO-S |(575) → | CHANNEL DECOD. & DEMOD. |(580) → DATA OUT

【Figure 6】

【Figure 7】

【Figure 8】

【Figure 9】

900

UE is provided pusch-Config with TDRA table including [new] txType per indexed row

ASC enabled

UE receives UL grant DCI and determines row index of TDRA table

UE determines numberOfRepetitions K for indexed row

UE determines txType for indexed row

If txType = 'U' for indexed row : do not count 'F' slots ( if any ) in number of K slots
Else if txType = 'F' for indexed row : do not count 'U' slots ( if any ) in number of K slots
Else : consider all allocated slots as available

UE transmits PUSCH of a PUSCH repetition in remaining available slots

【Figure 10】

1000

UE is provided pusch-Config with TDRA table including multiple SLIVs per indexed row

UE receives UL grant DCI and determines row index of TDRA table

UE determines numberOfRepetitions K using length of SLIV sequence for the indexed row

If SLIV = 'not valid' for a slot in indexed row : do not count slot as available
Else ( any valid SLIV ): consider the slot as available

UE transmits PUSCH of a PUSCH repetition in remaining available slots

[Figure 11]

1100

UE is provided xdd-config with 'U' = disabled

ASC enabled

UE determines slot configuration ('D', 'U', 'F')

UE determines the number of K slots allocated for PUSCH repetition

UE determines 'D' slot(s) : not counted in number of K slots

UE determines 'U' slot(s) : not counted in number of K slots

UE transmits PUSCH of a PUSCH repetition in remaining available slots

EP 4 622 357 A2

48

[Figure 12]

1200

ASC enabled

UE is provided pusch-Config with txType
'F' = enabled and 'U' = disabled

UE determines slot configuration ('D', 'U', 'F')

UE determines the number of K slots allocated for PUSCH repetition

UE determines 'D' slot(s) : not counted in number of K slots

UE determines 'U' slot(s) : not counted in number of K slots

UE transmits PUSCH of a PUSCH repetition in remaining available slots

EP 4 622 357 A2

[Figure 13]

EP 4 622 357 A2

1300

UE is configured with ( new ) txType field in DCI

ASC enabled

UE receives UL grant DCI and determines row index of TDRA table

UE determines numberOfRepetitions K for indexed row

UE determines txType field value in UL grant DCI

If txType = ' U' : do not count ' F' slots ( if any ) in number of K slots
Else if txType = ' F' : do not count ' U' slots ( if any ) in number of K slots
Else : consider all allocated slots as available

UE transmits PUSCH of a PUSCH repetition in remaining available slots

# REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- NR, Physical channels and modulation. *3GPP TS 38.211 v17.0.0*
- NR, Multiplexing and Channel coding. *3GPP TS 38.212 v17.0.0*
- NR, Physical Layer Procedures for Contro. *3GPP TS 38.213 v17.0.0*
- NR, Physical Layer Procedures for Data. *3GPP TS 38.214 v17.0.0*
- NR, Medium Access Control (MAC) protocol specification. *3GPP TS 38.321 v16.5.0*
- NR, Radio Resource Control (RRC) Protocol Specification (herein. *3GPP TS 38.331 v16.5.0*
- NR; Requirements for support of radio resource management. *3GPP TS 38.133 v16.8.0*